# EUROPEAN PATENT APPLICATION

(11) **EP 4 756 399 A1**
(43) Date of publication of application: **10.06.2026**
(21) Application number: 24859510.0
(22) Date of filing: 19.08.2024
(51) Int. Cl.: G01N 1/10

(54) **JIG FOR COLLECTION KIT**

(30) Priority: 31.08.2023 JP 2023141355
(71) Applicant: Terumo Kabushiki Kaisha, Tokyo 151-0072 (JP)
(72) Inventor: OKABE, Hiroshi, Fujinomiya-shi, Shizuoka 418-0004 (JP)
(74) Representative: TBK
(86) International application number: PCT/JP2024/029255
(87) International publication number: WO 2025/047477

(57) **Abstract**

A collection kit jig (200) includes a kit holding portion (202), a container holding portion (204), and an elevation mechanism (210). The kit holding portion (202) holds a collection kit (150) by supporting a holder (160) in a posture in which a housing chamber (28) is positioned above an outflow path (30). The container holding portion (204) is disposed below the kit holding portion (202) and holds a sampling container (90). The elevation mechanism (210) relatively raises or lowers the kit holding portion (202) with respect to the container holding portion (204).

## Description

### Technical Field

The present invention relates to a collection kit jig for connecting a sampling container to a collection kit.

### Background Art

Types of blood products include a red blood cell product, a plasma product, a platelet product, and a whole blood product. Among such products, blood products containing components required by the patient are selected and used. Blood products are used for blood transfusion, for example.

The blood products are stored and transported in the state of being housed in medical bags. In order to ensure safety of the blood products, a small amount of sample may be collected from a medical bag to perform a culture test. In the culture test, a sample is collected from a medical bag into a culture bottle, and the culture bottle is placed in an environment suitable for bacterial growth. The presence or absence of bacteria in the blood product is determined based on whether or not growth of bacteria is observed.

Among the blood products, a test for the platelet product is performed by the following procedure. Hereinafter, a medical bag housing a platelet product is referred to as a platelet bag. First, collection bag with a small volume is connected to a medical bag housing the platelet product. Thereafter, a portion of the platelet product is transferred from the platelet bag to a collection bag. Next, the collection bag is disconnected from the platelet bag.

Next, the collection bag is conveyed to a clean bench. In the clean bench, the platelet product in the collection bag is infused into a culture bottle. Prior to the infusion, a tube of the collection bag is connected to a tube extending from a sample collection tube. A prescribed amount of the platelet product is transferred from the collection bag to the sample collection tube with reference to scales of the sample collection tube.

Thereafter, an operator operates a valve of the sample collection tube while visually checking the scales of the sample collection tube to transfer a prescribed amount of the platelet product from the sample collection tube to the culture bottle. In the culture test, anaerobic culture and aerobic culture are performed. Therefore, the platelet product is dispensed into a culture bottle used for the anaerobic culture and a culture bottle used for the aerobic culture. Thereafter, the culture bottles are set in a culturing apparatus and subjected to the culture test for a predetermined period.

For example, US 8777921 discloses a collection device for collecting a sample from a medical bag.

### Citation List

### Patent Literature

Patent Literature 1: US 8777921

### Summary of Invention

As a kit for collecting a prescribed amount of sample from the medical bag, a collection kit including an inflow tube, and a collection bag provided on a downstream side of the inflow tube is conceivable. In a case where a large amount of a culture test of a blood product is performed, it is required to improve work efficiency of the culture test. Therefore, it is desirable that the collection bag and the sampling container can be easily connected.

An object of the present invention is to solve the problem described above.
(1) One aspect of the present invention is a collection kit jig used to connect a collection kit to a sampling container, in which the collection kit includes an inflow tube to which a medical bag housing a collection target is connected, a collection bag, and a holder holding the collection bag, the collection bag includes a housing chamber connected to a downstream of the inflow tube to house the collection target, and an outflow path that is connected to a downstream of the housing chamber to allow the collection target to flow out of the housing chamber and transfers the collection target toward the sampling container, and the collection kit jig includes a kit holding portion that holds the collection kit by supporting the holder in a posture in which the housing chamber is positioned above the outflow path, a container holding portion positioned below the kit holding portion and holding the sampling container, and an elevation mechanism that raises or lowers the kit holding portion with respect to the container holding portion.

In a state where the collection kit is fixed to the kit holding portion and the sampling container is fixed to the container holding portion, the kit holding portion is brought relatively close to the container holding portion by the elevation mechanism, whereby the sampling container is connected to the outflow path of the collection kit. Therefore, the collection target can be easily transferred from the collection kit to the sampling container.

In addition, since the collection bag is held by the holder, slackening of the collection bag is avoided. Therefore, it is easy to attach the collection bag to the collection kit jig via the holder.

(2) In the collection kit jig according to the above item (1), the collection kit may include an adapter connected to the outflow path and to which the sampling container is attached, the collection kit jig may include an adapter support portion that holds the adapter, and the elevation mechanism may integrally raise or lower the kit holding portion and the adapter support portion with respect to the container holding portion.

By attaching the sampling container to the adapter, the sampling container can be connected to the outflow path via the adapter. Note that the adapter may be detachably connected to the collection bag.

(3) In the collection kit jig according to the above item (1) or (2), the kit holding portion may include a base portion and a retainer provided in the base portion, and the base portion and the retainer may form a housing space for housing the holder in a state of surrounding the holder. Here, the retainer is a holding tool for holding the collection kit.

By holding the holder in the kit holding portion so as to surround the holder with the base portion and the retainer, the posture of the holder is stabilized. Therefore, the occurrence of a displacement between the outflow path in the collection kit held by the kit holding portion and the sampling container held by the container holding portion is avoided. Therefore, when the kit holding portion relatively approaches the container holding portion, the sampling container is connected to the outflow path.

(4) In the collection kit jig according to the above item (3), the retainer may include a pocket space into which an end portion extending in an up-down direction in the holder can be inserted, and an insertion port positioned above the pocket space to insert the end portion into the pocket space.

Since the end portion of the holder is inserted into the pocket space of the retainer, the collection kit is reliably positioned. In addition, since the insertion port is positioned above the pocket space, it is easy to insert the end portion of the holder into the pocket space.

(5) In the collection kit jig according to the above item (4), the retainer may have a lid portion capable of opening and closing the insertion port.

By closing the lid portion after the end portion of the holder is inserted into the pocket space of the retainer, the end portion of the holder is prevented from coming out of the pocket space. Therefore, the collection kit is prevented from being displaced with respect to the retainer.

(6) In the collection kit jig according to any one of the above items (1) to (5), the holder may have a plurality of holding holes, and the kit holding portion may have a plurality of holding pins to be respectively inserted into the plurality of holding holes.

With this configuration, the collection kit can be positioned and fixed to the kit holding portion with a simple structure.

(7) In the collection kit jig according to any one of the above items (1) to (6), the kit holding portion may include a cover that covers the holder at a position facing the collection bag.

The collection bag is protected by the cover.

(8) In the collection kit jig according to any one of the above items (1) to (7), the collection kit may include an exhaust flow path for exhausting air inside the housing chamber, and an exhaust valve provided in the exhaust flow path, and the kit holding portion may include an exhaust valve shielding portion covering an upper portion of the exhaust valve.

The exhaust valve shielding portion suppresses inflow of air into the exhaust flow path via the exhaust valve. Therefore, it is easy to transfer the collection target from the medical bag to the housing chamber of the collection bag.

(9) In the collection kit jig according to any one of the above items (1) to (8), the collection bag may include the plurality of housing chambers.

In this case, the collection target can be stored separately in each of the plurality of housing chambers. Therefore, the plurality of sampling containers can be connected to the plurality of housing chambers, respectively. That is, the collection target can be collected simultaneously in the plurality of sampling containers, and the collection efficiency increases.

(10) In the collection kit jig according to the above item (9), the collection kit jig may include a clamp portion that blocks communication between the plurality of housing chambers.

Since the clamp portion blocks the communication between the plurality of housing chambers, the collection target is prevented from moving from one housing chamber to another housing chamber. Therefore, it is easy to transfer the collection target from the plurality of housing chambers to the sampling container.

(11) In the collection kit jig according to any one of the above items (1) to (10), the container holding portion may be positioned and fixed, and the elevation mechanism may raise or lower the kit holding portion with respect to the container holding portion.

(12) In the collection kit jig according to any one of the above items (1) to (10), the kit holding portion may be positioned and fixed, and the elevation mechanism may raise or lower the container holding portion with respect to the kit holding portion.

According to the present invention, the collection target can be easily transferred from the collection kit to the sampling container. In addition, the collection kit can be fixed to the kit holding portion.

### Brief Description of Drawings

Fig. 1 is a schematic front view of a collection kit according to a first aspect.
Fig. 2 is a schematic front view in which a holder is omitted from Fig. 1.
Fig. 3 is an enlarged front view of a collection bag constituting the collection kit.
Fig. 4 is a schematic perspective view of the holder constituting the collection kit.
Fig. 5 is a schematic exploded perspective view of a collection kit according to a second aspect.
Fig. 6 is a schematic perspective view of the holder illustrated in Fig. 5 as viewed from a back surface.
Fig. 7 is a schematic perspective view illustrating a state where a plurality of collection kits is stacked.
Fig. 8 is a schematic perspective view of a collection kit jig according to a first embodiment of the present invention.
Fig. 9 is a schematic perspective view illustrating a process of holding a collection kit in a kit holding portion.
Fig. 10 is a schematic perspective view of a clamp portion as viewed from a back side.
Fig. 11 is a longitudinal cross-sectional side view illustrating a main portion of an elevation mechanism in the collection kit jig.
Fig. 12 is an explanatory view of a process of storing a collection target in a housing chamber in the collection kit.
Fig. 13 is a schematic perspective view illustrating a state where the collection kit is connected to a sampling container.
Fig. 14 is an explanatory view of a process of transferring the collection target from the housing chamber to the sampling container.
Fig. 15 is a schematic perspective view of a collection kit jig according to a second embodiment of the present invention.
Fig. 16 is a schematic perspective view of the collection kit jig illustrated in Fig. 15 as viewed from a direction different from Fig. 15.
Fig. 17 is a schematic perspective view of a collection kit jig according to a third embodiment of the present invention.
Fig. 18 is a longitudinal cross-sectional side view of a clamp portion illustrated in Fig. 17.
Fig. 19 is a longitudinal cross-sectional side view illustrating a main portion of an elevation mechanism in the collection kit jig.
Fig. 20 is a schematic perspective view of a collection kit jig according to a fourth embodiment of the present invention.
Fig. 21 is a schematic front view of a kit holding portion illustrated in Fig. 20.
Fig. 22 is a schematic perspective view of a cover and a clamp portion illustrated in Fig. 20.
Fig. 23 is a schematic perspective view of a collection kit jig according to a fifth embodiment of the present invention.
Fig. 24 is a side view of a main portion of the collection kit jig illustrated in Fig. 23.
Fig. 25 is a schematic perspective view of a collection kit jig according to a sixth embodiment of the present invention.
Fig. 26 is a side view of a main portion of the collection kit jig illustrated in Fig. 25.
Fig. 27 is a main portion front view illustrating a configuration in which an adapter is detachable with respect to a collection bag.

### Description of Embodiments

### (1) Configuration of collection kit

First, two aspects of the collection kit will be exemplarily described. Note that, hereinafter, an aspect is exemplified in which each of the housing chamber 28, the coupling flow path 26, the outflow path 30, the adapter 40, the sampling container 90, and the like is two, but the number of these components may be one, or three or more. However, the numbers of the housing chamber 28, the coupling flow path 26, the outflow path 30, the adapter 40, and the sampling container 90 are the same. Similarly, the number of the exhaust flow path 32 and the number of exhaust valve 50 may be one, or three or more. Similarly, the number of the connection member 62, the attachment member 64, the engagement hole 120, and the positioning hole 130 may be one, or three or more.

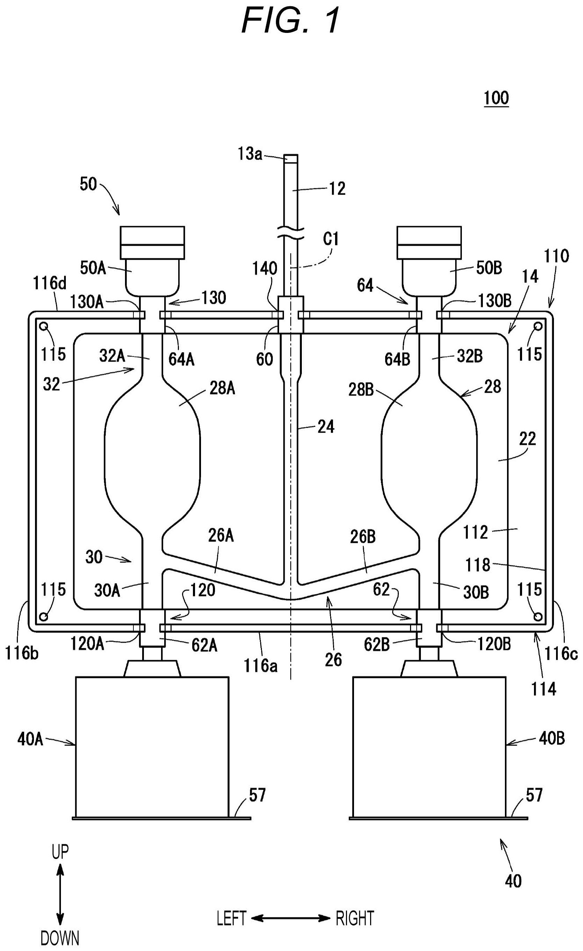

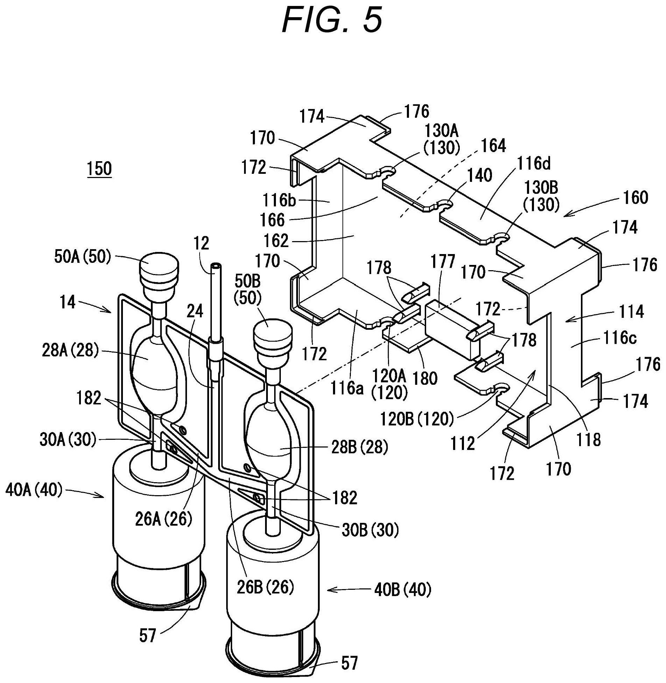

The collection kit 100 illustrated in Fig. 1 and the collection kit 150 illustrated in Fig. 5 are typically fixed to collection kit jigs 200, 300, 400, 600, 700, and 800 described later in a posture in which the component illustrated at the low position in Figs. 1 to 6 faces downward and the component illustrated at the high position in Figs. 1 to 6 faces upward. Therefore, the up, down, left, and right in the following description correspond to the up, down, left, and right in each drawing. However, the upper side means a relatively higher position than the lower side, and the lower side means a relatively lower position than the upper side. Therefore, the upper side does not necessarily refer to the vertically upper side. Similarly, the lower side does not necessarily refer to the vertically lower side.

Note that the left-right direction is a horizontal direction orthogonal to the vertical direction, and hereinafter, may be referred to as a "width direction". In addition, a horizontal direction orthogonal to the vertical direction and the width direction may be referred to as a thickness direction.

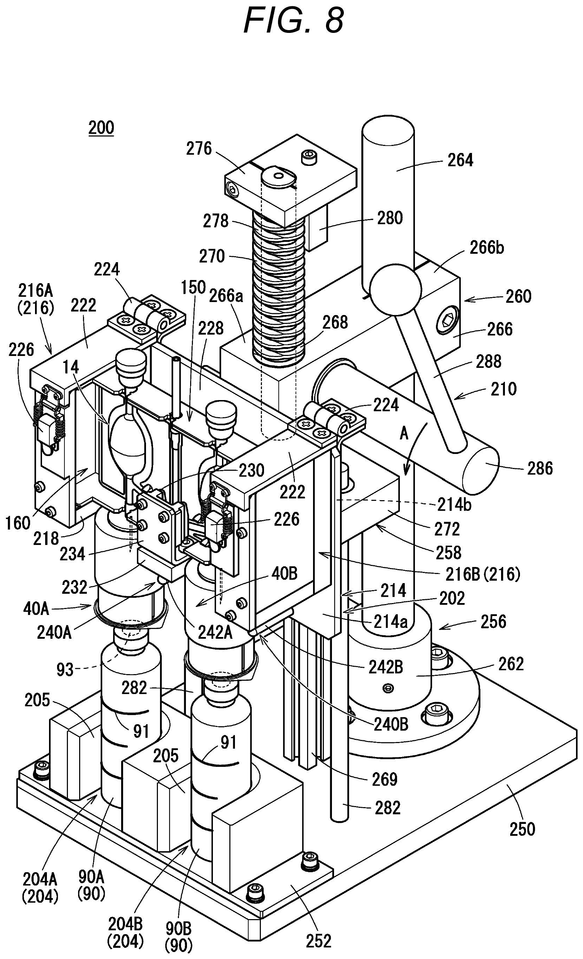

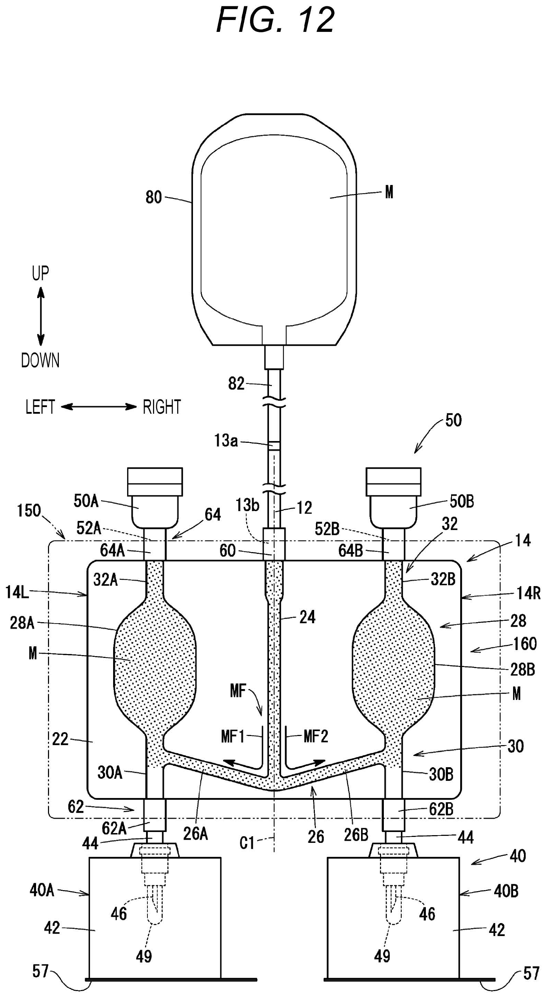

Fig. 1 is a schematic front view of a collection kit 100 according to a first aspect. The collection kit 100 is used to transfer a collection target M housed in a medical bag 80 illustrated in Fig. 12 to two sampling containers 90 (first sampling container 90A and second sampling container 90B) illustrated in Figs. 8, 13, 14, and the like. The collection target M is, for example, a blood product such as a platelet product. The collection target M may be a medicine other than a blood product. The collection target M may be a liquid sample other than a medicine.

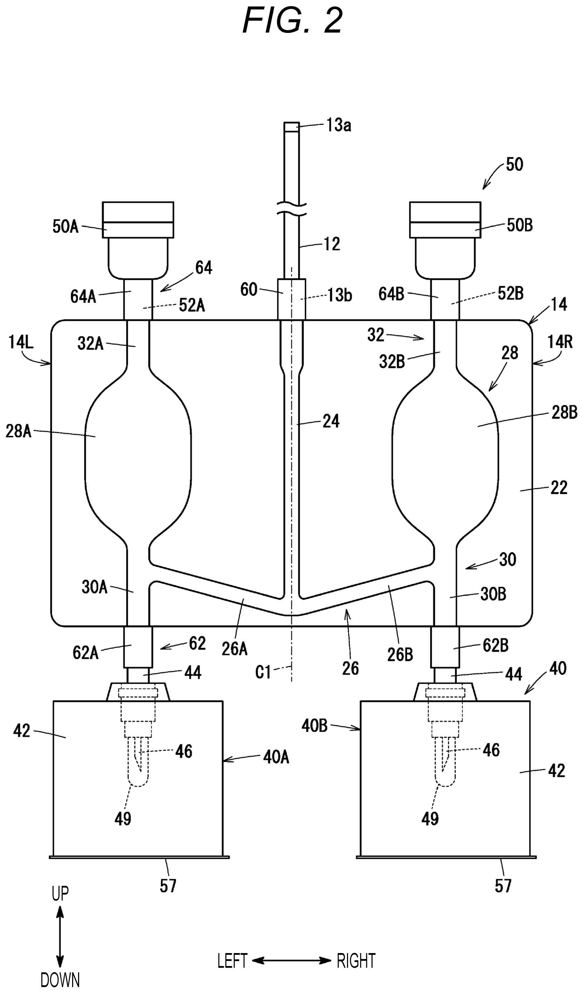

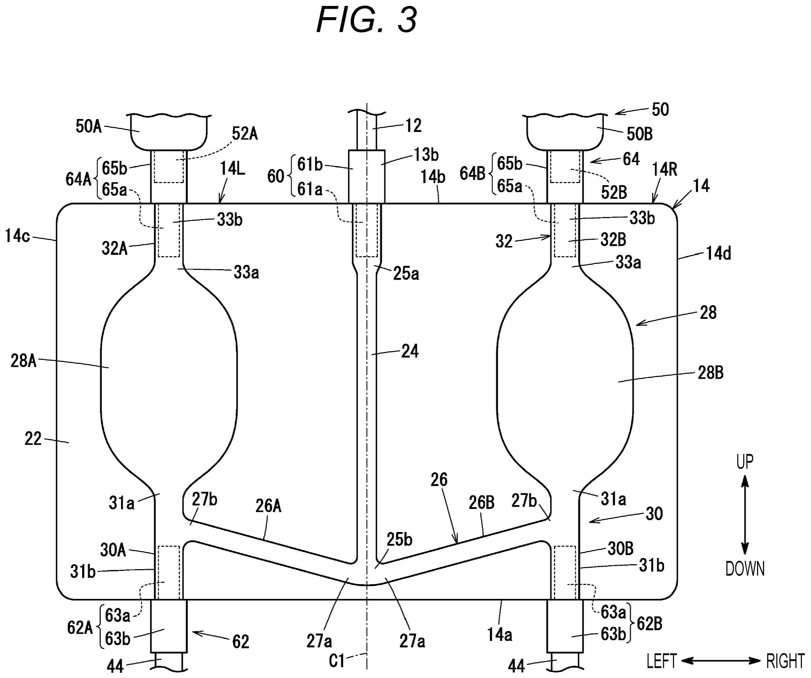

The collection kit 100 includes an inflow tube 12, a collection bag 14, and a holder 110 that holds the collection bag 14. A schematic front view of the collection kit 100 without the holder 110 is illustrated in Fig. 2. In addition, an enlarged front view of the collection bag 14 is illustrated in Fig. 3.

The inflow tube 12 is, for example, a transparent or semi-transparent medical tube made of a thermoplastic resin such as a vinyl chloride resin. The inflow tube 12 can be connected to or separated from another medical tube without exposing the inside thereof to outside air, for example, by using an aseptic connection device, a tube sealer, and the like. The inflow tube 12 has an upstream side end portion 13a and a downstream side end portion 13b. In an initial state in which the collection kit 100 is provided as a product, the upstream side end portion 13a is welded and sealed.

As will be described later, the downstream side end portion 13b is connected to an upper side portion 14b (see Fig. 3) of the collection bag 14 via a relay member 60. The relay member 60 is, for example, a sleeve made of a material harder than the collection bag 14.

The collection bag 14 has two flexible sheets 22 overlapping each other in the thickness direction. A common flow path 24, two coupling flow paths 26, two housing chambers 28, two outflow paths 30, and two exhaust flow paths 32 are formed between the two flexible sheets 22. The two coupling flow paths 26 are a first coupling flow path 26A and a second coupling flow path 26B. The two housing chambers 28 are a first housing chamber 28A and a second housing chamber 28B. The two outflow paths 30 are a first outflow path 30A and a second outflow path 30B, and the two exhaust flow paths 32 are a first exhaust flow path 32A and the second exhaust flow path 32B.

In the two flexible sheets 22, portions other than the first coupling flow path 26A, the second coupling flow path 26B, the first housing chamber 28A, the second housing chamber 28B, the first outflow path 30A, the second outflow path 30B, the first exhaust flow path 32A, and the second exhaust flow path 32B are welded and joined to each other. In the initial state, the first coupling flow path 26A, the second coupling flow path 26B, the first housing chamber 28A, the second housing chamber 28B, the first outflow path 30A, the second outflow path 30B, the first exhaust flow path 32A and the second exhaust flow path 32B bulge in the thickness direction of the collection bag 14. In the first coupling flow path 26A, the second coupling flow path 26B, the first housing chamber 28A, the second housing chamber 28B, the first outflow path 30A, the second outflow path 30B, the first exhaust flow path 32A and the second exhaust flow path 32B, one flexible sheet 22 and the other flexible sheet 22 are away from each other along the thickness direction.

The collection bag 14 has a rectangular shape with a long side in the width direction and a short side in the up-down direction in a front view. Therefore, as illustrated in Fig. 3, the collection bag 14 has a lower side portion 14a and an upper side portion 14b extending along the width direction, and a left side portion 14c and a right side portion 14d extending along the up-down direction.

The common flow path 24 extends along the up-down direction from the upper side portion 14b toward the lower side portion 14a so as to divide the collection bag 14 into substantially half in the width direction. That is, the common flow path 24 divides the collection bag 14 into a first region 14L on the left side of the common flow path 24 and a second region 14R on the right side of the common flow path 24. The first coupling flow path 26A, the first housing chamber 28A, the first outflow path 30A, and the first exhaust flow path 32A are positioned in the first region 14L. The second coupling flow path 26B, the second housing chamber 28B, the second outflow path 30B, and the second exhaust flow path 32B are positioned in the second region 14R. In the illustrated example, the first region 14L and the second region 14R have a positional relationship of line symmetry with an axis C1 of the common flow path 24 as the center of symmetry, but the present invention is not particularly limited thereto.

The common flow path 24 has an upstream side end portion 25a and a downstream side end portion 25b. The downstream side end portion 13b of the inflow tube 12 is connected to the upstream side end portion 25a of the common flow path 24 via the above relay member 60. The relay member 60 includes a small diameter portion 61a and a large diameter portion 61b. The small diameter portion 61a is inserted into the upstream side end portion 25a of the common flow path 24. The large diameter portion 61b protrudes upward from the upper side portion 14b of the collection bag 14. The downstream side end portion 13b of the inflow tube 12 is inserted into the large diameter portion 61b. The relay member 60 seals between the downstream side end portion 13b of the inflow tube 12 and the collection bag 14 in an airtight and liquid-tight manner.

The downstream side end portion 25b of the common flow path 24 is positioned near the lower side portion 14a of the collection bag 14. Each upstream side end portion 27a of the first coupling flow path 26A and the second coupling flow path 26B branches from the downstream side end portion 25b of the common flow path 24. The first coupling flow path 26A and the second coupling flow path 26B have a V shape with a top portion facing downward (the upper portion opened). An intersection angle between the common flow path 24 and the first coupling flow path 26A is, for example, 10° to 85°. An intersection angle between the common flow path 24 and the second coupling flow path 26B is, for example, 10° to 85°.

In the illustrated example, the first housing chamber 28A has a substantially elliptical shape in a front view as viewed from the thickness direction of the collection bag 14. The first housing chamber 28A may have a shape other than a substantially elliptical shape. The volume of the first housing chamber 28A is, for example, about 8 mL to about 10 mL. The first housing chamber 28A temporarily stores the collection target M collected in the first sampling container 90A.

The upstream side end portion 31a of the first outflow path 30A is connected to the lowermost portion of the first housing chamber 28A. The first outflow path 30A extends toward the lower side portion 14a of the collection bag 14. The downstream side end portion 27b of the first coupling flow path 26A is connected to a portion close to the first housing chamber 28A in the first outflow path 30A. Therefore, the first coupling flow path 26A is connected below the first housing chamber 28A via the first outflow path 30A. Therefore, the first housing chamber 28A communicates with the common flow path 24 via the first outflow path 30A and the first coupling flow path 26A.

As illustrated in Figs. 1 and 2, the collection kit 150 further has two adapters 40. The two adapters 40 are a first adapter 40A and a second adapter 40B. The first adapter 40A and the second adapter 40B may be detachable with respect to the collection bag 14. This configuration will be described later as one modification.

The first adapter 40A is connected to a downstream side end portion 31b of the first outflow path 30A. Specifically, a first connection member 62A is provided at the downstream side end portion 31b (see Fig. 3) of the first outflow path 30A. The first connection member 62A is, for example, a sleeve made of a material harder than the collection bag 14. The first connection member 62A has a small diameter portion 63a and a large diameter portion 63b. The small diameter portion 63a is inserted into the downstream side end portion 31b of the first outflow path 30A. The large diameter portion 63b protrudes downward from the lower side portion 14a of the collection bag 14.

Here, the first connection member 62A includes a breakable plug (not illustrated) therein. In the initial state, the plug seals the first outflow path 30A. As a result, the collection target M is prevented from flowing from the first housing chamber 28A to the first adapter 40A. When the collection target M is transferred from the first housing chamber 28A to the first adapter 40A, the plug is broken by being bent. As a result, the first outflow path 30A is opened.

As illustrated in Fig. 2, the first adapter 40A includes an adapter body 42 and a communication pipe portion 44 provided at an upper end portion of the adapter body 42. By inserting the communication pipe portion 44 into the inner hole of the large diameter portion 63b of the first connection member 62A, the first adapter 40A is connected to the first outflow path 30A. The first connection member 62A seals between the communication pipe portion 44 and the collection bag 14 in a liquid-tight and air-tight manner. The opening of the adapter body 42 is closed by a release sheet 57.

The first adapter 40A has a needle pipe 46 in the adapter body 42. The needle pipe 46 is connected to the communication pipe portion 44. When the neck portion of the first sampling container 90A is inserted into the adapter body 42, the needle pipe 46 penetrates a plug 93 of the first sampling container 90A (see Fig. 8). Therefore, as the first connection member 62A is opened as described above, the first sampling container 90A and the first housing chamber 28A communicate with each other via the communication pipe portion 44 and the needle pipe 46.

The first adapter 40A includes a rubber cover 49 that covers the needle pipe 46. When the needle pipe 46 punctures the plug 93 of the first sampling container 90A, the rubber cover 49 is compressed by being pushed toward the collection bag 14. The needle pipe 46 penetrates the compressed rubber cover 49. When the needle pipe 46 comes out of the plug 93 of the first sampling container 90A, the rubber cover 49 extends by elastic restoring force to cover the needle pipe 46 again.

As illustrated in Fig. 3, the upstream side end portion 33a of the first exhaust flow path 32A is connected to the uppermost portion of the first housing chamber 28A and extends toward the upper side portion 14b of the collection bag 14. A first attachment member 64A is provided at a downstream side end portion 33b of the first exhaust flow path 32A. The first attachment member 64A is, for example, a sleeve made of a material harder than the collection bag 14. The first attachment member 64A has a small diameter portion 65a and a large diameter portion 65b. The small diameter portion 65a is inserted into the downstream side end portion 33b of the first exhaust flow path 32A. The large diameter portion 65b protrudes upward from the upper side portion 14b of the collection bag 14. A first attachment pipe portion 52A of a first exhaust valve 50A is inserted into the inner hole of the large diameter portion 65b.

As described above, the first exhaust valve 50A is connected to the collection bag 14 via the first attachment member 64A. The first attachment member 64A seals between the first attachment pipe portion 52A and the collection bag 14 in a liquid-tight and air-tight manner.

The first exhaust valve 50A has an internal filter (not illustrated) that allows gas to pass and prevents liquid from passing. In a case where the main component of the collection target M is water, the filter is preferably a hydrophilic filter. In this case, when the collection target M moves to the first exhaust valve 50A and comes into contact with the filter, the pores of the filter are closed by the liquid. After this blockage, the filter blocks the passage of gases and liquids. Therefore, backflow of air from the first exhaust valve 50A toward the first housing chamber 28A is prevented. A typical example of the collection target M whose main component is water is a blood product.

Shapes, positions, and the like of the second coupling flow path 26B, the second housing chamber 28B, the second outflow path 30B, the second connection member 62B, the second exhaust flow path 32B, and the second attachment member 64B are configured according to shapes, positions, and the like of the first coupling flow path 26A, the first housing chamber 28A, the first outflow path 30A, the first connection member 62A, the first exhaust flow path 32A, and the first attachment member 64A, respectively. The same applies to the first adapter 40A and the second adapter 40B, and the same applies to the first exhaust valve 50A (first attachment pipe portion 52A) and the second exhaust valve 50B (second attachment pipe portion 52B). Therefore, detailed description of the components will be omitted. In addition, the same parts or portions are given the same reference symbols.

In the illustrated example, the first coupling flow path 26A and the second coupling flow path 26B, the first housing chamber 28A and the second housing chamber 28B, the first outflow path 30A and the second outflow path 30B, and the first exhaust flow path 32A and the second exhaust flow path 32B are in a line symmetrical relationship with respect to the axis C1 (see Figs. 1 to 3) of the common flow path 24 as a center of symmetry. However, the shapes and positions of these components may not be in a line symmetric relationship.

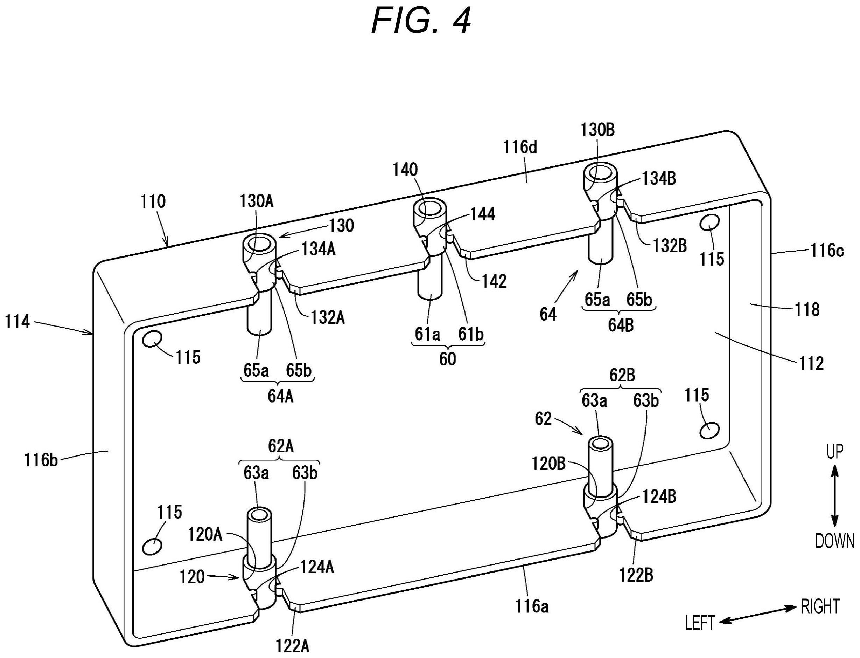

As illustrated in Fig. 4, the holder 110 has a box shape in which one end face of a hollow rectangular parallelepiped is removed. The holder 110 includes a main wall portion 112 extending along the up-down direction and the width direction, and a peripheral wall portion 114 continuing so as to be orthogonal to the main wall portion 112. The main wall portion 112 has a holding hole 115 at each of the four corner portions.

The peripheral wall portion 114 includes a bottom portion 116a, a first side portion 116b, a second side portion 116c, and a ceiling portion 116d. The bottom portion 116a, the first side portion 116b, the second side portion 116c, and the ceiling portion 116d are connected in a rectangular shape. The holder 110 further includes an opening portion 118 that expands along the up-down direction and the width direction. The opening portion 118 faces the main wall portion 112. Hereinafter, in the thickness direction, a direction from the main wall portion 112 toward the opening portion 118 may be referred to as a front side, and a direction from the opening portion 118 toward the main wall portion 112 may be referred to as a back side.

The bottom portion 116a protrudes in the thickness direction from the lower side of the main wall portion 112. The bottom portion 116a has a first engagement hole 120A and a second engagement hole 120B as plurality of engagement holes 120. A first notch 122A and a second notch 122B are formed in the bottom portion 116a. The first notch 122A and the second notch 122B extend in the thickness direction from the opening portion 118 as a starting point, and are continuous with the first engagement hole 120A and the second engagement hole 120B, respectively. A pair of first protrusion portions 124A is provided between the first notch 122A and the first engagement hole 120A, and a pair of second protrusion portions 124B is provided between the second notch 122B and the second engagement hole 120B.

The large diameter portion 63b of the first connection member 62A is inserted into the first engagement hole 120A via the first notch 122A. The pair of first protrusion portions 124A prevents the large diameter portion 63b of the first connection member 62A from coming out of the first engagement hole 120A. The large diameter portion 63b of the second connection member 62B is inserted into the second engagement hole 120B via the second notch 122B. The pair of second protrusion portions 124B prevents the large diameter portion 63b of the second connection member 62B from coming out of the second engagement hole 120B.

The ceiling portion 116d faces the bottom portion 116a with the first side portion 116b and the second side portion 116c interposed therebetween. The ceiling portion 116d has a first positioning hole 130A, the fitting hole 140, and a second positioning hole 130B. In the ceiling portion 116d, a first insertion port 132A, a slit 142, and a second insertion port 132B are formed. The first insertion port 132A and the second insertion port 132B extend in the thickness direction from the opening portion 118 as a starting point, and are continuous with the first positioning hole 130A and the second positioning hole 130B, respectively. A pair of first stoppers 134A is provided between the first insertion port 132A and the first positioning hole 130A, and a pair of second stoppers 134B is provided between the second insertion port 132B and the second positioning hole 130B.

The large diameter portion 65b of the first attachment member 64A is inserted into the first positioning hole 130A through the first insertion port 132A. The pair of first stoppers 134A function to prevent the large diameter portion 65b of the first attachment member 64A from coming out of the first positioning hole 130A. The large diameter portion 65b of the second attachment member 64B is inserted into the second positioning hole 130B through the second insertion port 132B. The pair of second stoppers 134B function to prevent the large diameter portion 65b of the second attachment member 64B from coming out of the second positioning hole 130B.

The slit 142 also extends in the thickness direction starting from the opening portion 118 and is continuous with the fitting hole 140. A pair of claw portions 144 is provided between the slit 142 and the fitting hole 140. The large diameter portion 61b of the relay member 60 is inserted into the fitting hole 140 via the slit 142. The pair of claw portions 144 prevents the large diameter portion 61b of the relay member 60 from coming out of the fitting hole 140.

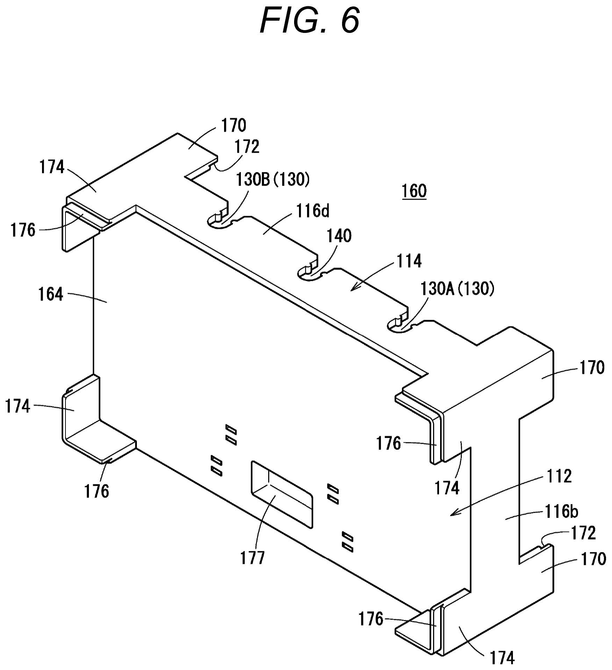

Next, a collection kit 150 according to a second aspect will be described with reference to Figs. 5 and 6. Note that the same components as those illustrated in Figs. 1 to 4 are denoted by the same reference numerals, and a detailed description of the components is omitted.

As illustrated in Figs. 5 and 6, the collection kit 150 includes the collection bag 14 and a holder 160 that holds the collection bag 14.

In the holder 160, the main wall portion 112 has a substantially rectangular shape, and has a main surface 162 (see Fig. 5) facing the collection bag 14 and a back surface 164 (see Fig. 6) which is a back surface of the main surface 162. The direction connecting the main surface 162 and the back surface 164 is the thickness direction of the holder 160. The outer peripheral edge portion of the main wall portion 112 has the peripheral wall portion 114. The peripheral wall portion 114 protrudes in a direction away from the main surface 162 along the thickness direction. Therefore, the main surface 162 is positioned in an internal space 166 formed by the peripheral wall portion 114.

The main surface 162 is provided with an abutting portion 177 and four pin portions 178. The abutting portion 177 and the four pin portions 178 protrude from the main surface 162 along the thickness direction toward the collection bag 14. The abutting portion 177 is a convex portion having a substantially quadrangular cylindrical shape. Four insertion holes 182 are formed in the collection bag 14. A downstream portion of the first coupling flow path 26A is positioned between two of the four insertion holes 182. A downstream portion of the second coupling flow path 26B is positioned between two of the four insertion holes 182. The four pin portions 178 constituting the holder 160 are respectively inserted into the four insertion holes 182.

Each of the four corner portions in the outer peripheral edge portion of the main wall portion 112 has a first protruding portion 170 integrally continuous with the peripheral wall portion 114. The first protruding portion 170 protrudes beyond the peripheral wall portion 114 in a direction away from the main surface 162 along the thickness direction. When the first protruding portion 170 is viewed from the thickness direction of the holder 160, the first protruding portion 170 has an L shape. In the first protruding portion 170, a first engagement step portion 172 is formed at an end portion in the thickness direction. In the illustrated example, the first engagement step portion 172 is constituted by an inner step portion formed by cutting out a part of the inner surface of the first protruding portion 170.

Each of the four corner portions on the outer peripheral edge portion of the main wall portion 112 has a second protruding portion 174. The second protruding portion 174 protrudes in a direction opposite to the first protruding portion 170 and away from the back surface 164 along the thickness direction. When the second protruding portion 174 is viewed from the thickness direction of the holder 160, the second protruding portion 174 has an L shape. The first protruding portion 170 and the second protruding portion 174 are integrally continuous with the peripheral wall portion 114.

A second engagement step portion 176 is formed at the end portion of the second protruding portion 174 in the thickness direction. In the illustrated example, the second engagement step portion 176 is constituted by an outer step portion formed by cutting out a part of the outer surface of the second protruding portion 174. Here, the first engagement step portion 172 may be an outer step portion formed by cutting out a part of the outer surface of the first protruding portion 170. In this case, the second engagement step portion 176 is an inner step portion formed by cutting out a part of the inner surface of the second protruding portion 174.

The bottom portion 116a of the peripheral wall portion 114 has the engagement hole 120 (the first engagement hole 120A and the second engagement hole 120B) and a clearance notch 180 as a notch. The clearance notch 180 is, for example, a clearance notch for avoiding interference of a clamp portion 230 with the bottom portion 116a when holding the collection kit 150 in a collection kit jig 200 illustrated in Fig. 8. The clearance notch 180 is formed below the abutting portion 177 in the bottom portion 116a. On the other hand, the ceiling portion 116d of the peripheral wall portion 114 has the first positioning hole 130A, the fitting hole 140, and the second positioning hole 130B.

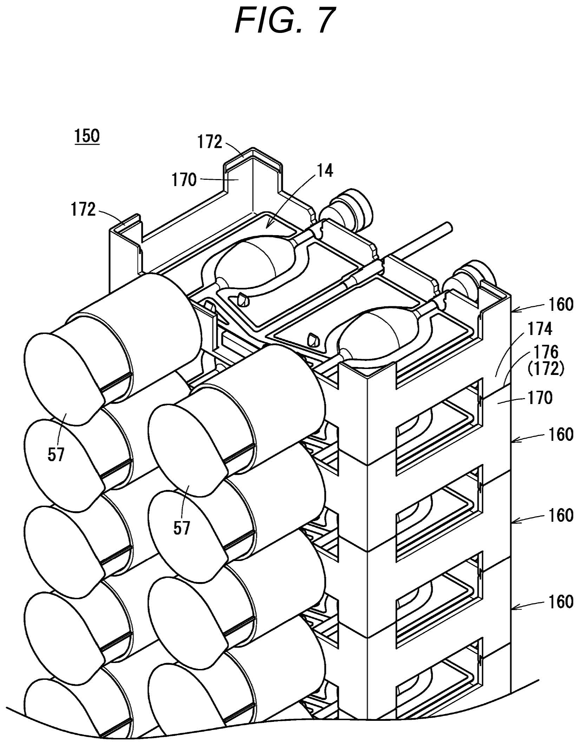

In the case of storing or transporting the plurality of collection kits 150, as illustrated in Fig. 7, the plurality of collection kits 150 can be stacked along the thickness direction. At this time, the second engagement step portion 176 of another holder 160 adjacent to the holder 160 is engaged with the first engagement step portion 172 of the holder 160. In this manner, the holder 160 can be stacked via the first engagement step portion 172 and the second engagement step portion 176 in a state of holding the collection bag 14. Therefore, the plurality of collection bags 14 and the plurality of holders 160 can be organized and stored or transported together without being scattered.

### (2) First embodiment

Next, a configuration of a collection kit jig 200 according to a first embodiment will be described with reference to Fig. 8.

The collection kit jig 200 includes a kit holding portion 202, a container holding portion 204, and an elevation mechanism 210. Note that the container holding portion 204 includes a first container holding portion 204A and a second container holding portion 204B.

The kit holding portion 202 holds the collection kit 150. The kit holding portion 202 has a base portion 214 fixed to the elevation mechanism 210. The base portion 214 is a plate-shaped member having a thickness in the horizontal direction, and is formed in a quadrangular shape in the present embodiment. Note that the base portion 214 is not particularly limited in shape. The base portion 214 can be vertically displaced by the elevation mechanism 210. A rear surface 214b of the base portion 214 is fixed to the elevation mechanism 210.

The kit holding portion 202 includes two retainers 216 provided on a front surface 214a of the base portion 214. The two retainers 216 are a first retainer 216A and a second retainer 216B. The first retainer 216A and the second retainer 216B protrude forward from the front surface 214a, and extend along the vertical direction. As described later, the retainer 216 is a holder that holds the collection kit 150 in the kit holding portion 202.

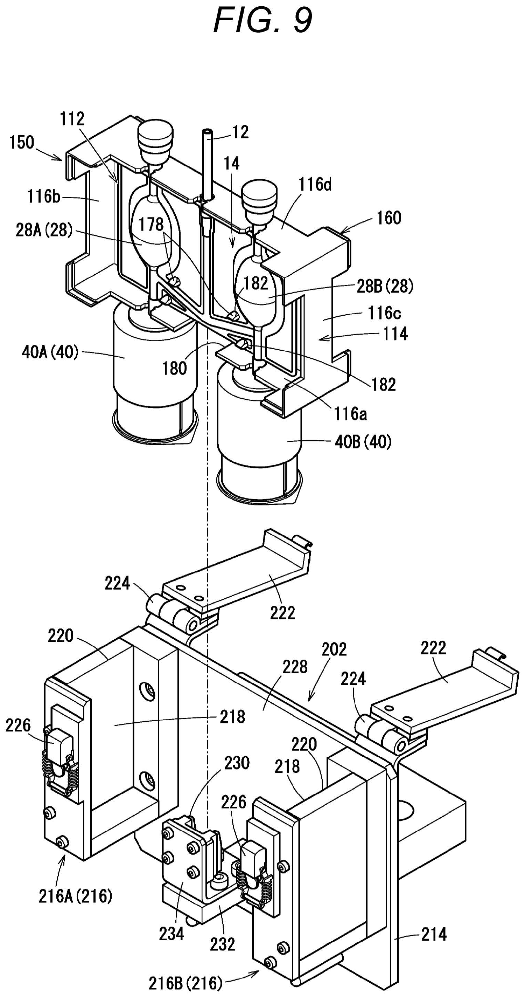

The first retainer 216A is a quadrangular cylindrical body in which a right portion facing the second retainer 216B and an upper portion facing upward are opened. As illustrated in Fig. 9, the first retainer 216A has a pocket space 218 therein. The opening of the upper portion of the first retainer 216A is positioned above the pocket space 218. This opening is an insertion port 220 for inserting the first side portion 116b of the holder 160 into the pocket space 218. The first retainer 216A has a lid portion 222 for opening and closing the insertion port 220. The lid portion 222 is rotatably coupled to the base portion 214 via a hinge 224. One end of the hinge 224 is coupled to the upper surface of the lid portion 222, and the other end of the hinge 224 is connected to the rear surface 214b of the base portion 214. The first retainer 216A has a fastener 226 on the front surface 214a. The fastener 226 locks the lid portion 222 in the closed position.

The second retainer 216B is configured similarly to the first retainer 216A. Therefore, in the second retainer 216B, the same names and the same reference numerals are used for the same components as the components of the first retainer 216A. However, the second retainer 216B is a quadrangular cylindrical body in which a left portion facing the first retainer 216A and an upper portion facing upward are opened.

The front surface 214a of the base portion 214, the first retainer 216A, and the second retainer 216B form a housing space 228. The holder 160 is housed in the housing space 228 in a state of constituting the collection kit 150 by holding the collection bag 14. When the collection kit 150 is housed in the housing space 228, the front surface 214a of the base portion 214, the left side portion of the first retainer 216A, and the right side portion of the second retainer 216B surround the main wall portion 112 of the holder 160 and the first side portion 116b and the second side portion 116c of the peripheral wall portion 114. Here, the first side portion 116b and the second side portion 116c are end portions of the peripheral wall portion 114 extending in the up-down direction.

The kit holding portion 202 further includes a clamp portion 230. Specifically, a prismatic stay 232 extending forward is provided on the front surface 214a of the base portion 214. An L-shaped stay 234 is provided on the upper surface of the prismatic stay 232. The L-shaped stay 234 has a substantially L-shape when the kit holding portion 202 is viewed from the right side to the left side. In the L-shaped stay 234, the portion extending in the up-down direction has a reverse surface 234b facing substantially the center of the lower edge front surface of the collection bag 14. The clamp portion 230 is provided on the reverse surface 234b.

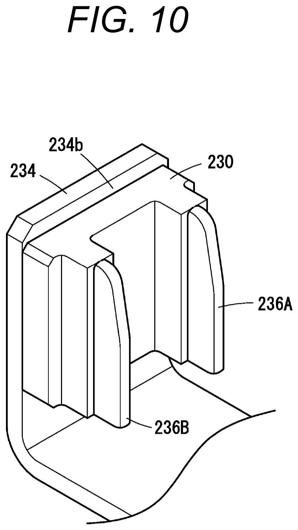

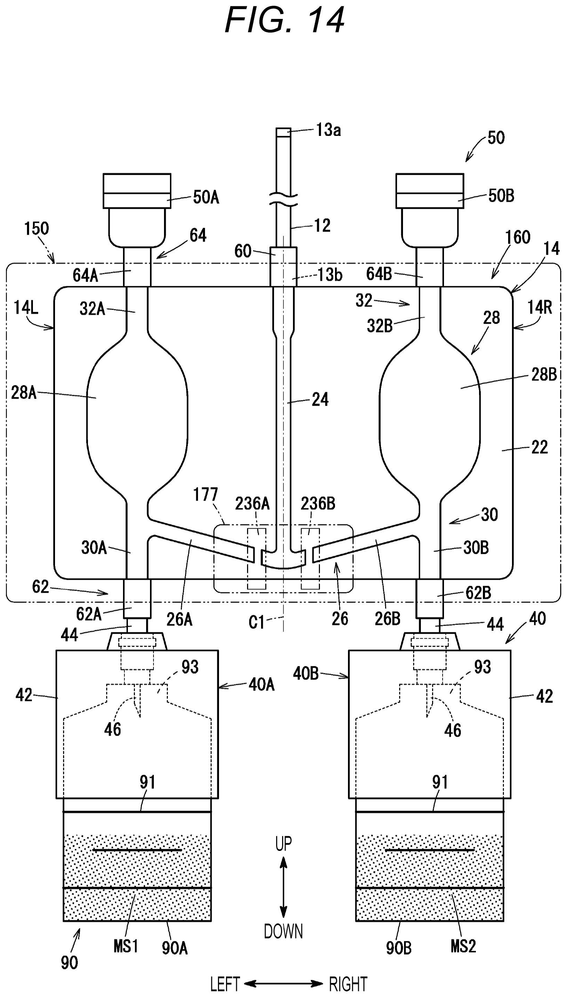

As illustrated in Fig. 10, the clamp portion 230 has a first projecting portion 236A and a second projecting portion 236B at the rear portion. The first projecting portion 236A and the second projecting portion 236B extend along the up-down direction. As illustrated in Fig. 14, the first coupling flow path 26A in the collection bag 14 is sandwiched between the abutting portion 177 of the holder 160 and the first projecting portion 236A. The second coupling flow path 26B in the collection bag 14 is sandwiched between the abutting portion 177 of the holder 160 and the second projecting portion 236B. Thus, communication between the first housing chamber 28A and the second housing chamber 28B is blocked.

Note that the clamp portion 230 is inserted into the clearance notch 180 of the holder 160. Therefore, interference of the clamp portion 230 with the bottom portion 116a is avoided. In addition, in a state where the collection kit 150 is fixed to the kit holding portion 202, the clamp portion 230 is positioned inside the four pin portions 178 of the holder 160.

As illustrated in Fig. 8, in a case where the collection kit 150 includes the first adapter 40A and the second adapter 40B, the collection kit jig 200 preferably further includes a first adapter support portion 240A and a second adapter support portion 240B. The first adapter support portion 240A and the second adapter support portion 240B are aligned in the horizontal direction at the same height.

The first adapter support portion 240A is provided in the kit holding portion 202 and fixes the first adapter 40A. The first adapter support portion 240A has a pair of first protrusions 242A protruding from the front surface 214a of the base portion 214 and away from each other in the horizontal direction. The first adapter support portion 240A holds the first adapter 40A between the pair of first protrusions 242A. An inner surface of one of the first protrusions 242A and an inner surface of the other first protrusion 242A are holding surfaces for holding the first adapter 40A. The interval between the inner surface of one of the first protrusions 242A and the inner surface of the other first protrusion 242A is preferably set to be slightly smaller than the outer diameter of the first adapter 40A (holding cylinder). Thus, the first adapter 40A can be held with an appropriate fixing force.

The second adapter support portion 240B has a pair of second protrusions 242B protruding from the front surface 214a of the base portion 214 and away from each other in the horizontal direction. The pair of second protrusions 242B holds the second adapter 40B in the same manner as the pair of first protrusions 242A. In this manner, the second adapter support portion 240B is provided in the kit holding portion 202 and fixes the second adapter 40B.

The collection kit jig 200 includes a plate-shaped platform 250 constituting the lower portion of the collection kit jig 200. The first container holding portion 204A and the second container holding portion 204B are provided on the upper surface of the platform 250. Specifically, the pedestal 252 is fixed to the upper surface of the platform 250. The first container holding portion 204A is formed by forming a container holding groove 205 that is recessed in a U shape from the front side toward the back side and has an open upper portion in the left portion of the pedestal 252. The second container holding portion 204B is formed by forming a container holding groove 205 that is recessed in a U shape from the front side toward the back side and has an open upper portion in the right portion of the pedestal 252. In this manner, the first container holding portion 204A and the second container holding portion 204B are provided integrally with the pedestal 252.

The first container holding portion 204A is disposed below the kit holding portion 202 and directly below the first adapter support portion 240A. The first sampling container 90A is held in the container holding groove 205 of the first container holding portion 204A. The interval between one inner surface and the other inner surface of the container holding groove 205 is preferably set to be slightly smaller than the outer shape of the first sampling container 90A. Thus, the first sampling container 90A can be held with an appropriate fixing force. A scale 91 is provided on a side surface of the first sampling container 90A and a side surface of the second sampling container 90B.

The second container holding portion 204B is disposed below the kit holding portion 202 and directly below the second adapter support portion 240B. The second sampling container 90B is held in the container holding groove 205 of the second container holding portion 204B, similarly to the first sampling container 90A.

The collection kit jig 200 may include a first electronic balance, a second electronic balance, a first weight indicator, and a second weight indicator. Although none of the first electronic balance, the second electronic balance, the first weight indicator, and the second weight indicator is illustrated, the first electronic balance and the second electronic balance can be provided directly below the two container holding grooves 205 in the pedestal 252, for example. The first weight indicator and the second weight indicator can be provided, for example, on the platform 250, the pedestal 252, or the like.

The first electronic balance measures the weight of the collection target M transferred into the first sampling container 90A. The first weight indicator indicates the value measured by the first electronic balance. The second electronic balance measures the weight of the collection target M transferred into the second sampling container 90B. The second weight indicator indicates the value measured by the second electronic balance. Therefore, the user can quickly grasp the accurate weight of the collection target M in each of the first sampling container 90A and the second sampling container 90B.

In the collection kit jig 200, the elevation mechanism 210 moves the kit holding portion 202 in the up-down direction. The elevation mechanism 210 includes a frame-shaped portion 256 fixed to the platform 250, a displacement portion 258 supported by the frame portion 256 so as to be movable up and down, and an elevation operation portion 260 attached to the frame-shaped portion 256.

The frame-shaped portion 256 includes a support column holder 262 fixed to the upper surface of the platform 250, a support column 264 supported by the support column holder 262 and protruding upward, and a guide block 266 fixed to the support column 264. The guide block 266 is attached at a right angle to the support column 264 and extends in the front-back direction along the thickness direction of the holder 160. The guide block 266 has a first end portion 266a which is a rear end portion and a second end portion 266b which is a front end portion. The first end portion 266a is fixed to the support column 264. The displacement portion 258 is disposed at the second end portion 266b. A guide hole 268 penetrating in the up-down direction is formed in the second end portion 266b.

The frame-shaped portion 256 further includes a subframe 269 disposed between the guide block 266 and the platform 250. The subframe 269 extends in the up-down direction. The upper end of the subframe 269 is coupled between the first end portion 266a and the second end portion 266b of the guide block 266. The lower end of the subframe 269 is supported by the platform 250.

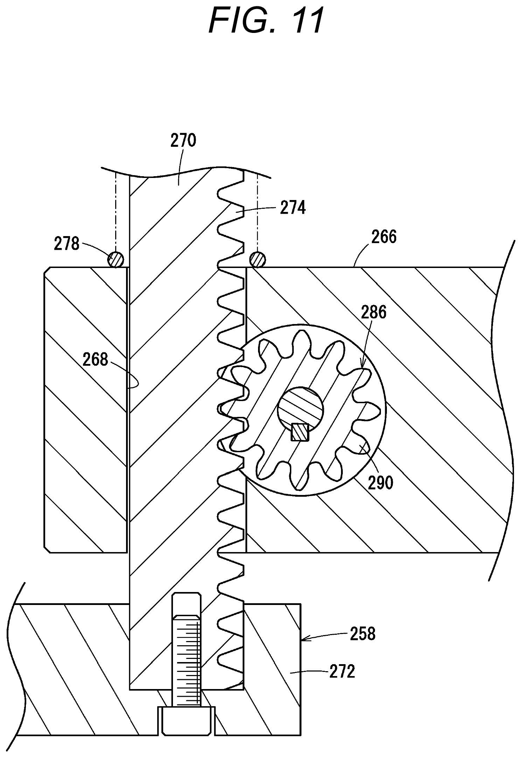

The displacement portion 258 includes an elevation rod 270 inserted into the guide hole 268 of the guide block 266 and a support 272 fixed to a lower end of the elevation rod 270. As illustrated in Fig. 11, a rack 274 is formed on the elevation rod 270 along the extending direction (up-down direction) of the elevation rod 270. As illustrated in Fig. 8, a stationary seat 276 is fixed to an upper end of the elevation rod 270.

A return spring 278 including a coil spring is disposed between the guide block 266 and the stationary seat 276. The lower end of the return spring 278 abuts on the upper surface of the guide block 266, and the upper end of the return spring 278 abuts on the lower surface of the stationary seat 276. The elevation rod 270 is inserted into the return spring 278. The elastic force of the return spring 278 acts to hold the displacement portion 258 in the initial position.

A positioning block 280 is fixed to the stationary seat 276. The positioning block 280 protrudes downward from the lower surface of the stationary seat 276. The lower surface of the positioning block 280 faces the upper surface of the guide block 266. When the displacement portion 258 moves down, the lower end of the positioning block 280 abuts on the upper surface of the guide block 266, so that the downward movement of the displacement portion 258 is stopped.

The support 272 is a block-shaped member extending in the horizontal direction. The base portion 214 of the kit holding portion 202 is fixed to the support 272. Two guide rods 282 are respectively inserted into two holes provided at both end portions of the support 272. The two guide rods 282 protrude upward from the platform 250 in parallel with each other. The guide rods 282 guide the support 272 to move up and down. Note that three or more guide rods 282 may be provided on the platform 250.

The elevation operation portion 260 includes a rotary rod 286 rotatably supported by the guide block 266 and an operation lever 288 fixed to the rotary rod 286. The rotary rod 286 is rotatable about a horizontal axis. As illustrated in Fig. 11, the rotary rod 286 has a gear portion 290 that meshes with the rack 274 of the elevation rod 270. The gear portion 290 is disposed inside the guide block 266. Since the gear portion 290 meshes with the rack 274, when the gear portion 290 rotates with the rotation of the rotary rod 286, the elevation rod 270 moves up or down according to the rotation direction of the gear portion 290.

In Fig. 8, the operation lever 288 is a section gripped by a user when the user operates the elevation operation portion 260, and is fixed to the rotary rod 286 at a right angle. The user can rotate the rotary rod 286 by moving the operation lever 288.

The collection kit jig 200 configured as described above is used as follows. In the first embodiment, a collection method of distributing the collection target M (see Fig. 12) to the sampling container 90 (see Fig. 14) using the collection kit 150 will be described.

First, as illustrated in Fig. 12, the collection target M is transferred from the medical bag 80 to the collection bag 14. Specifically, the medical bag 80 is joined to the collection kit 150. In a case where the medical bag 80 is a platelet bag, the collection target M is a platelet product. The medical bag 80 has a supply tube 82 for connection. The supply tube 82 is connected to the inflow tube 12. The supply tube 82 is joined to the inflow tube 12 without coming into contact with outside air using an aseptic joining device.

Next, a liquid collection target M such as a platelet product is introduced into the collection bag 14. This process is started and progressed in a state where the medical bag 80 is disposed above the collection bag 14. At this time point, the plugs of the first connection member 62A and the second connection member 62B are maintained in the closed state.

The collection target M flows out of the medical bag 80 by gravity and flows into the common flow path 24 via the supply tube 82 and the inflow tube 12. The collection target M moves toward the lower side portion 14a of the collection bag 14 along the common flow path 24 by gravity. Each upstream side end portion 27a of the first coupling flow path 26A and the second coupling flow path 26B is connected to the downstream side end portion 25b of the common flow path 24. Therefore, the collection target M is divided into a first branch MF1 flowing from the common flow path 24 into the first coupling flow path 26A and a second branch MF2 flowing from the common flow path 24 into the second coupling flow path 26B.

The first branch MF1 rises as it moves toward the first housing chamber 28A in the first coupling flow path 26A. The air in the first coupling flow path 26A is pushed evenly by the rising first branch MF1 and moves toward the first housing chamber 28A. Therefore, the air remaining in the first coupling flow path 26A is reduced. At this point, the first outflow path 30A is closed by the plug of first connection member 62A. Therefore, the first branch MF1 temporarily flows into the first outflow path 30A and then flows into the first housing chamber 28A. Therefore, at least a part of the air in the first outflow path 30A is pushed out by the first branch MF1 and moves to the first housing chamber 28A. As a result, the air remaining in the first outflow path 30A is reduced.

When the first branch MF1 flows into the first housing chamber 28A, the liquid level of the collection target M rises in the first housing chamber 28A. Accordingly, the air in the first housing chamber 28A is pushed by the collection target M and rises in the first housing chamber 28A. The air flows into the first attachment pipe portion 52A via the first exhaust flow path 32A connected to the uppermost portion of the first housing chamber 28A, and is further discharged from the first exhaust valve 50A to the atmosphere.

After the first housing chamber 28A is filled with the collection target M, the collection target M flows into the first exhaust valve 50A via the first exhaust flow path 32A and the first attachment pipe portion 52A. When the collection target M comes into contact with the filter in the first exhaust valve 50A, the collection target M is captured and held in the pore of the filter. As a result, the collection target M is blocked by the filter. As a result, the first exhaust valve 50A is closed, and the collection target M is prevented from passing through the first exhaust valve 50A and being discharged to the outside air. Therefore, a necessary amount of the collection target M is stored in the first housing chamber 28A. The necessary amount is, for example, about 8 mL to 10 mL.

The second branch MF2 flowing into the second outflow path 30B via the second coupling flow path 26B is also housed in the second housing chamber 28B in the same manner as described above. In the collection bag 14, in a case where the first region 14L and the second region 14R are in a line symmetrical relationship with respect to each other, in the first housing chamber 28A and the second housing chamber 28B, substantially the same amount of collection targets M can be stored at substantially the same timing.

Thereafter, the medical bag 80 is separated from the inflow tube 12 by a tube sealer (high frequency sealer or ultrasonic sealer) and the like. The tube sealer separates the inflow tube 12 from the supply tube 82 of the medical bag 80, and at the same time, seals the upstream side end portion 13a of the inflow tube 12 by welding. The inflow tube 12 and the supply tube 82 are separated from each other without exposing internal flow paths to the outside air.

The medical bag 80 separated from the inflow tube 12 is stored until a culture test is completed, and then used. On the other hand, the collection kit 150 housing the collection target M in the first housing chamber 28A and the second housing chamber 28B is carried into a clean bench. The collection kit jig 200 illustrated in Fig. 8 is installed on the clean bench.

As shown in Fig. 9, when holding the kit holding portion 202 in the collection kit 150, the user opens the lid portion 222 of the first retainer 216A and the lid portion 222 of the second retainer 216B. The user grips the holder 160, disposes the first side portion 116b above the insertion port 220 of the first retainer 216A, and disposes the second side portion 116c above the second retainer 216B. Next, the user lowers the collection kit 150, inserts the first side portion 116b into the pocket space 218 via the insertion port 220 of the first retainer 216A, and inserts the second side portion 116c into the pocket space 218 via the insertion port 220 of the second retainer 216B.

The first protruding portion 170, the second protruding portion 174, and a part of the bottom portion 116a constituting the lower surface of the left side portion of the holder 160 abut on the bottom inner surface of the first retainer 216A in the pocket space 218 of the first retainer 216A. The first protruding portion 170, the second protruding portion 174, and a part of the bottom portion 116a constituting the lower surface of the right side portion of the holder 160 abut on the bottom inner surface of the second retainer 216B in the pocket space 218 of the second retainer 216B. As a result, lowering of the holder 160 is stopped.

At this time, as illustrated in Fig. 14, the first projecting portion 236A of the clamp portion 230 faces the upstream of the first coupling flow path 26A, and the second projecting portion 236B of the clamp portion 230 faces the upstream of the second coupling flow path 26B. The upstream of the first coupling flow path 26A is sandwiched and crushed between the abutting portion 177 of the holder 160 and the first projecting portion 236A. The upstream of the second coupling flow path 26B is sandwiched and crushed between the abutting portion 177 of the holder 160 and the second projecting portion 236B. As described above, communication between the first housing chamber 28A and the second housing chamber 28B is blocked.

A seal portion may be provided in at least one of the first coupling flow path 26A and the second coupling flow path 26B by ultrasonic sealing, high frequency sealing, and the like. Also in this case, communication between the first housing chamber 28A and the second housing chamber 28B is blocked. Therefore, in this case, it is not necessary to provide the clamp portion 230 in the kit holding portion 202.

Next, as illustrated in Fig. 8, the user closes the two insertion ports 220 by closing the two lid portions 222. The user then locks the lid portion 222 in the closed position with the fastener 226. Thus, the holder 160 is prevented from coming out of the pocket space 218, and the holder 160 is positioned in the housing space 228. In the housing space 228, the main wall portion 112 of the holder 160, and the first side portion 116b and the second side portion 116c of the peripheral wall portion 114 are surrounded by the front surface 214a of the base portion 214, the left side portion of the first retainer 216A, and the left side portion of the second retainer 216B.

In addition, the user fixes the first sampling container 90A and the second sampling container 90B to the first container holding portion 204A and the second container holding portion 204B, respectively. The user peels the release sheet 57 from each of the first adapter 40A and the second adapter 40B. The above operation may be performed before or after the operation of holding the collection kit 150 in the kit holding portion 202.

Next, the user performs an operation for transferring the collection target M from the collection kit 150 to the first sampling container 90A and the second sampling container 90B. Specifically, the user grips and moves the operation lever 288 in the direction of an arrow A (see Fig. 8). As a result, the rotary rod 286 rotates in the direction of the arrow A. As the rotary rod 286 rotates in this manner, the elevation rod 270 moves down. As illustrated in Fig. 11, the gear portion 290 of the rotary rod 286 meshes with the rack 274 of the elevation rod 270.

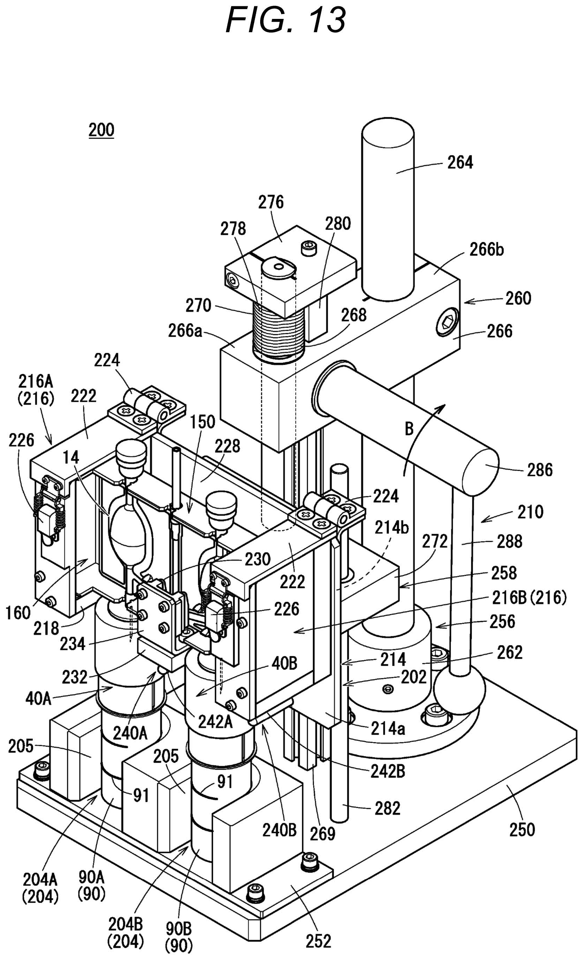

As illustrated in Fig. 13, the base portion 214 coupled to the elevation rod 270 via the support 272 moves down as the elevation rod 270 moves down. Therefore, the collection kit 150 fixed to the kit holding portion 202 also moves down. When the elevation rod 270 moves down, the return spring 278 disposed between the stationary seat 276 and the guide block 266 is compressed in the axial direction. That is, the elevation rod 270 moves down against the elastic force of the return spring 278.

As the collection kit 150 moves down, the first sampling container 90A is connected to the first adapter 40A, and the second sampling container 90B is connected to the second adapter 40B. The needle pipe 46 of the first adapter 40A penetrates the plug 93 (see Fig. 8) of the first sampling container 90A, and the needle pipe 46 of the second adapter 40B penetrates the plug 93 of the second sampling container 90B.

Thereafter, the user breaks the plug of the first connection member 62A and the plug of the second connection member 62B. Accordingly, the first connection member 62A and the second connection member 62B are opened. As a result, as illustrated in Fig. 14, the collection target M in the first housing chamber 28A is sucked out by the negative pressure of the first sampling container 90A and moved to the first sampling container 90A. Similarly, the collection target M in the second housing chamber 28B is sucked out by the negative pressure of the second sampling container 90B and moved to the second sampling container 90B.

As described above, substantially the entire amount of the collection target M stored in the first housing chamber 28A is transferred to the first sampling container 90A, and substantially the entire amount of the collection target M stored in the second housing chamber 28B is transferred to the second sampling container 90B. That is, a first sample MS1 is introduced into the first sampling container 90A, and a second sample MS2 is introduced into the second sampling container 90B.

Next, the user operates the operation lever 288 of the elevation operation portion 260 to raise the collection kit 150. Specifically, the user rotates the operation lever 288 in a direction B in Fig. 13. Thus, the return spring 278 is released from the force to compress the return spring 278 downward. Therefore, the return spring 278 extends by elasticity and biases the guide block 266 upward. By this biasing, the elevation rod 270, the support 272, and the base portion 214 are integrally raised. Therefore, the collection kit 150 held by the kit holding portion 202 also moves up. With the rise of the collection kit 150, the first adapter 40A is removed from the first sampling container 90A and the second adapter 40B is removed from the second sampling container 90B. Through the above processes, the collection (sampling) of the collection target M using the collection kit 150 is completed.

In a case where the collection target M is a blood product, a culture test is performed for the first sample MS1 and the second sample MS2. Specifically, the first sample MS1 in the first sampling container 90A is used, for example, for anaerobic culture, and whether or not anaerobic bacteria grow is observed. The second sample MS2 in the second sampling container 90B is used, for example, for aerobic culture, and whether or not aerobic bacteria grow is observed. In both tests, the first sampling container 90A and the second sampling container 90B are used as culture bottles. In a case where the first sample MS1 and the second sample MS2 pass the culture test, the collection target M in the medical bag 80 from which the first sample MS1 and the second sample MS2 are collected is determined to be a passed product. The passed product is used for patient treatment (blood transfusion and the like).

The collection kit jig 200 according to the first embodiment has the following effects.

As illustrated in Figs. 2, 5, and 6, the collection kit 150 includes the inflow tube 12 to which the medical bag 80 housing the collection target M is connected, the collection bag 14, and the holder 160 holding the collection bag 14. The collection bag 14 includes the housing chamber 28 that is connected to the downstream side of the inflow tube 12 and houses the collection target M, and the outflow path 30 that is connected to the downstream side of the housing chamber 28, causes the collection target M to flow out of the housing chamber 28, and transfers the collection target M toward the sampling container 90.

The collection kit jig 200 illustrated in Fig. 8 is used to connect the collection kit 150 having such a configuration to the sampling container 90. The collection kit jig 200 includes a kit holding portion 202, a container holding portion 204, and an elevation mechanism 210. The kit holding portion 202 holds the collection kit 150 by supporting the holder 160 in a posture in which the housing chamber 28 is positioned above the outflow path 30. The container holding portion 204 is disposed below the kit holding portion 202 and holds the sampling container 90. As can be understood by comparing Figs. 8 and 13, the elevation mechanism 210 relatively raises or lowers the kit holding portion 202 with respect to the container holding portion 204. As shown in Figs. 8 and 13, in the collection kit jig 200, the container holding portion 204 is positioned and fixed to the platform 250, and the kit holding portion 202 is raised or lowered toward the container holding portion 204.

In a state where the collection kit 150 is fixed to the kit holding portion 202 and the sampling container 90 is fixed to the container holding portion 204, the kit holding portion 202 is brought relatively close to the container holding portion 204 by the elevation mechanism 210, whereby the sampling container 90 is connected to the outflow path 30 of the collection kit 150. Therefore, the collection target M can be easily transferred from the collection kit 150 to the sampling container 90.

In addition, since the collection bag 14 is held by the holder 160, slackening of the collection bag 14 is avoided. Therefore, it is easy to attach the collection bag 14 to the collection kit jig 200 via the holder 160.

The collection kit 150 includes an adapter 40 connected to the outflow path 30 and to which the sampling container 90 is attached. On the other hand, the collection kit jig 200 includes the first adapter support portion 240A and the second adapter support portion 240B as adapter supporting portions for holding the adapter 40. The elevation mechanism 210 integrally raises or lowers the kit holding portion 202 and the adapter supporting portion (the first adapter support portion 240A and the second adapter support portion 240B) relative to the container holding portion 204.

By attaching the sampling container 90 to the adapter 40, the sampling container 90 can be easily connected to the outflow path 30 via the adapter 40. Note that the adapter 40 may be detachably connected to the collection bag 14.

As illustrated in Fig. 9, the kit holding portion 202 includes the base portion 214 and the retainer 216 provided on the base portion 214. The base portion 214 and the retainer 216 form the housing space 228 for housing the holder 160 in a state of surrounding the holder 160.

By holding the holder 160 in the kit holding portion 202 so as to surround the holder 160 with the base portion 214 and the retainer 216, the posture of the holder 160 is stabilized. Therefore, the occurrence of a displacement between the outflow path 30 in the collection kit 150 held by the kit holding portion 202 and the sampling container 90 held by the container holding portion 204 is avoided. Therefore, when the kit holding portion 202 relatively approaches the container holding portion 204, the sampling container 90 is connected to the outflow path 30.

The retainer 216 has the pocket space 218 into which end portions (the first side portion 116b and the second side portion 116c) extending in the up-down direction in the holder 160 can be inserted, and the insertion port 220 positioned above the pocket space 218 and for inserting the end portion into the pocket space 218.

Since the end portion of the holder 160 is inserted into the pocket space 218 of the retainer 216, the collection kit 150 is reliably positioned. In addition, since the insertion port 220 is positioned above the pocket space 218, it is easy to insert the end portion of the holder 160 into the pocket space 218.

The retainer 216 has the lid portion 222 capable of opening and closing the insertion port 220.

By closing the lid portion 222 after the end portion of the holder 160 is inserted into the pocket space 218 of the retainer 216, the end portion of the holder 160 is prevented from coming out of the pocket space 218. Therefore, the collection kit 150 is prevented from being displaced with respect to the retainer 216.

As illustrated in Figs. 1 to 3, the collection bag 14 has the plurality of housing chambers 28 (in the illustrated example, the first housing chamber 28A and the second housing chamber 28B).

Therefore, the collection target M can be stored separately in each of the plurality of housing chambers 28. Therefore, the plurality of sampling containers 90 (in the illustrated example, the first sampling container 90A and the second sampling container 90B) can be connected to the plurality of housing chambers 28, respectively. That is, the collection target M can be collected simultaneously in the plurality of sampling containers 90. Therefore, the collection efficiency is improved.

As illustrated in Fig. 8, the collection kit jig 200 includes the clamp portion 230 that blocks communication between the plurality of housing chambers 28.

Since the clamp portion 230 blocks the communication between the plurality of housing chambers 28, the collection target M is prevented from moving from one housing chamber 28 (for example, the first housing chamber 28A) to another housing chamber (for example, the second housing chamber 28B). Therefore, it is easy to transfer the collection target M from the plurality of housing chambers 28 to the sampling container 90.

### (3) Second embodiment

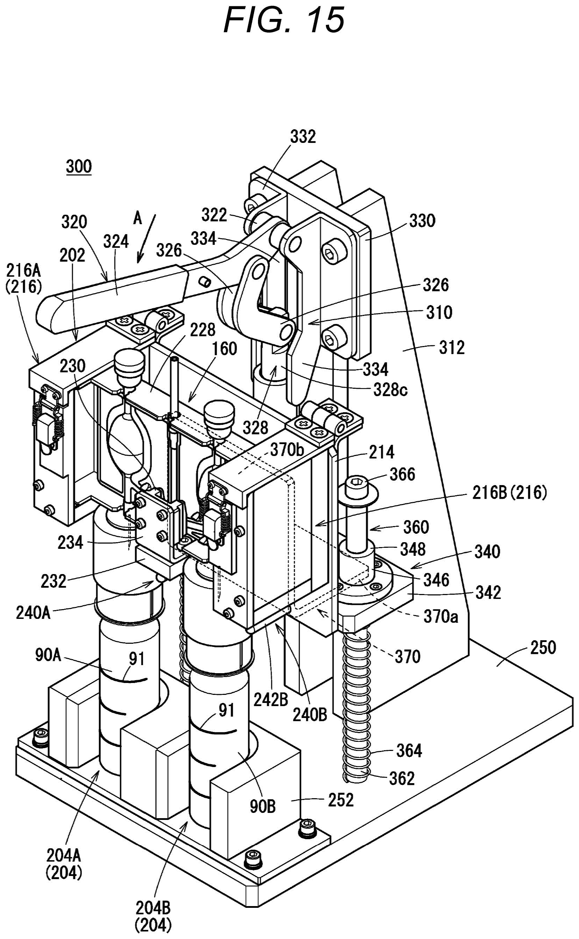

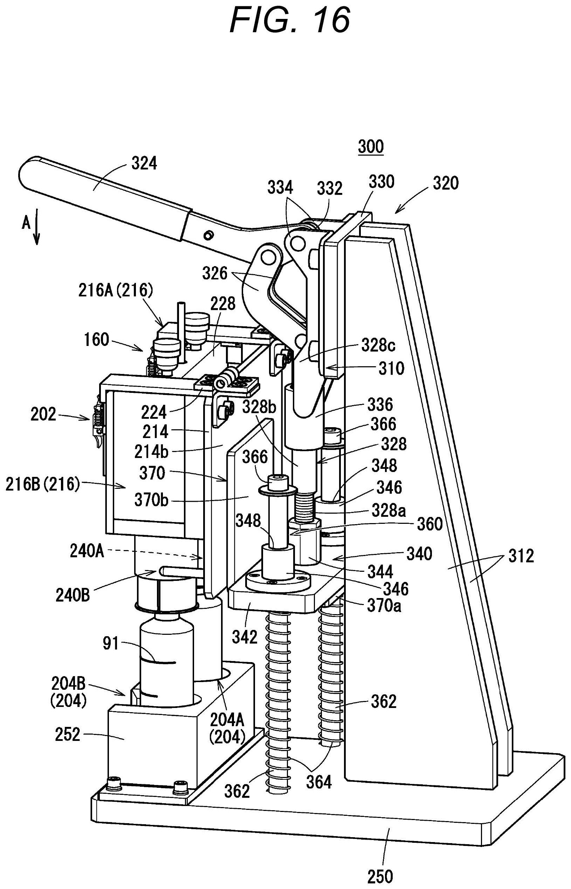

Next, a configuration of a collection kit jig 300 according to a second embodiment will be described with reference to Figs. 15 to 16. Note that the collection kit jig 300 according to the second embodiment includes a kit holding portion 202, a clamp portion 230, a first container holding portion 204A, and a second container holding portion 204B illustrated in Figs. 8 and 13. Therefore, in the collection kit jig 300 according to the second embodiment, the same components as those shown in Figs. 1 to 14 are denoted by the same reference numerals in Figs. 15 and 16, and the detailed description thereof will be omitted.

The collection kit jig 300 includes the kit holding portion 202, the first container holding portion 204A, the second container holding portion 204B, and an elevation mechanism 310.

In the collection kit jig 300, the elevation mechanism 310 moves the kit holding portion 202 in the up-down direction. The elevation mechanism 310 includes an elevation operation portion 320, a displacement portion 340, and a guide portion 360.

Two support plates 312 are installed upright on a platform 250. The elevation operation portion 320 is provided at the upper portions of the front surfaces of the two support plates 312. Specifically, the elevation operation portion 320 includes a support shaft 322, an operation lever 324, two V-shaped arms 326, and a coupling rod 328. More specifically, a lever attachment plate 330 is fixed to the upper portions of the front surfaces of the two support plates 312. A guide bracket 332 is provided on the front surface of the lever attachment plate 330. The guide bracket 332 has two support guide portions 334 extending in the width direction and bent forward. The support shaft 322 is supported by the two support guide portions 334. The support shaft 322 passes through a through hole of the operation lever 324. The operation lever 324 is rotatable about the support shaft 322.

The operation lever 324 has a substantially V-shape. The operation lever 324 is connected to a movable board 342 constituting the displacement portion 340 via the two V-shaped arms 326 and the coupling rod 328. Here, as illustrated in Fig. 16, the coupling rod 328 includes a male screw portion 328a, a large diameter portion 328b, and a small diameter portion 328c from the lower side to the upper side. The upper ends of the two V-shaped arms 326 are coupled to a V-shaped bent portion of operation lever 324. The lower ends of the two V-shaped arms 326 are coupled to the small diameter portion 328c constituting the upper portion of the coupling rod 328.

The movable board 342 extends along the width direction. A nut with plate 344 is disposed substantially at the center in the width direction of the movable board 342. The male screw portion 328a constituting the lower portion of the coupling rod 328 is screwed into a female screw of the nut with plate 344. Note that a chamfer 336 is attached to a side surface of the large diameter portion 328b constituting the intermediate portion of the coupling rod 328. In an initial stage before the operation lever 324 is operated, the chamfer 336 is sandwiched between lower ends of the two support guide portions 334.

First insertion holes (not illustrated) are formed in the left end and the right end of the movable board 342, respectively. The first insertion holes extend in the up-down direction. On the upper surface of the movable board 342, first stoppers 346 are provided at the left end and the right end, respectively. The first stopper 346 has a second insertion hole 348 that is located above the first insertion hole so as to overlap the first insertion hole.

Two guide rods 362 constituting the guide portion 360 are installed upright on the platform 250. Each of the two guide rods 362 passes through the first insertion hole and the second insertion hole 348. The guide rod 362 passes through the return spring 364. The lower end of the return spring 364 abuts on the upper surface of the platform 250. The upper end of the return spring 364 abuts on the lower surface of the movable board 342. The return spring 364 biases the movable board 342 upward.

An upper portion of each of the two guide rods 362 is exposed from the second insertion hole 348. A second stopper 366 is provided at the upper end of each of the two guide rods 362.

The movable board 342 and the base portion 214 of the kit holding portion 202 are coupled via an L-shaped bracket 370. Specifically, the L-shaped bracket 370 has a horizontal portion 370a extending in the front-back direction and a vertical portion 370b extending in the up-down direction. The horizontal portion 370a is coupled to the movable board 342 in a state where the upper surface of the horizontal portion 370a abuts on the lower surface of the movable board 342. Note that the horizontal portion 370a is inserted between the two guide rods 362. On the other hand, the vertical portion 370b is coupled to the base portion 214 in a state where the front surface of the vertical portion 370b abuts on the rear surface 214b of the base portion 214.

The collection kit jig 300 configured as described above is used as follows. In the second embodiment, a collection method of distributing the collection target M (see Fig. 12) to the sampling container 90 (see Fig. 14) using the collection kit 150 will be described. Here, the operation of moving the collection target M from the medical bag 80 to the collection bag 14 is the same as that in the first embodiment. The operation of holding the collection kit 150 in the kit holding portion 202 is also the same as that of the first embodiment. Therefore, description of these operations is omitted.

In order to transfer the collection target M from the collection kit 150 to the first sampling container 90A and the second sampling container 90B, the user grips one end of the operation lever 324 and rotates the operation lever 324 so that the one end moves down in the direction of an arrow A in Fig. 15. Thus, the coupling rod 328 moves down.

As illustrated in Fig. 16, since the male screw portion 328a of the coupling rod 328 is connected to the movable board 342 via the nut with plate 344 and the movable board 342 is coupled to the base portion 214, the movable board 342 and the kit holding portion 202 integrally move down with the coupling rod 328. When the movable board 342 moves down, a return spring 364 disposed between the platform 250 and the movable board 342 is compressed in the axial direction. That is, the movable board 342 moves down against the elastic force of the return spring 364.

As the kit holding portion 202 moves down, the collection kit 150 secured to the kit holding portion 202 also moves down. As a result, the first sampling container 90A is connected to the first adapter 40A, and the second sampling container 90B is connected to the second adapter 40B. The needle pipe 46 of the first adapter 40A penetrates the plug 93 (see Fig. 8) of the first sampling container 90A, and the needle pipe 46 of the second adapter 40B penetrates the plug 93 of the second sampling container 90B. Thereafter, the first connection member 62A and the second connection member 62B are opened by the same operation as in the first embodiment. Along with this, a first sample MS1 is introduced into the first sampling container 90A (see Fig. 14), and a second sample MS2 is introduced into the second sampling container 90B.

Next, the user rotates the operation lever 324 so that one end of the operation lever 324 illustrated in Figs. 15 and 16 is raised. Thus, the return spring 364 is released from the force to compress the return spring 364 downward. Therefore, the return spring 364 extends by elasticity. Accordingly, the movable board 342 is biased upward by the return spring 364. As a result, the movable board 342, kit holding portion 202, and the collection kit 150 integrally move up. With the rise of the collection kit 150, the first adapter 40A is removed from the first sampling container 90A and the second adapter 40B is removed from the second sampling container 90B. Through the above processes, the collection (sampling) of the collection target M using the collection kit 150 is completed.

The collection kit jig 300 according to the second embodiment has the same effect as the collection kit jig 200 according to the first embodiment.

### (4) Third embodiment

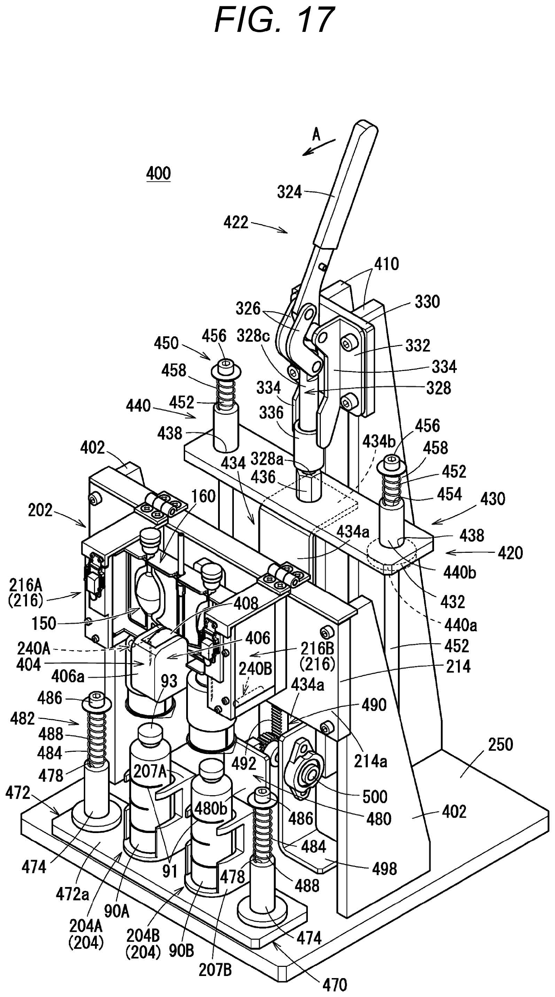

Next, a configuration of a collection kit jig 400 according to a third embodiment will be described with reference to Figs. 17 to 19. Note that the collection kit jig 400 according to the third embodiment includes a kit holding portion 202 illustrated in Figs. 8, 13, and 15. Therefore, in the collection kit jig 400 according to the third embodiment, the same components as those shown in Figs. 1 to 16 are denoted by the same reference numerals in Figs. 17 to 19, and the detailed description thereof will be omitted.

The collection kit jig 400 includes a first adapter support portion 240A, a second adapter support portion 240B, a kit holding portion 202, first container holding portion 204A, second container holding portion 204B, and an elevation mechanism 420.

In the collection kit jig 400, the elevation mechanism 420 moves a second displacement portion 470 including the first container holding portion 204A and the second container holding portion 204B in the up-down direction. Note that the kit holding portion 202 is positioned and fixed above the first container holding portion 204A and the second container holding portion 204B.

Specifically, two first support plates 402 are installed upright on the upper surface of the platform 250. The two first support plates 402 are disposed parallel to each other at the left end and the right end of the platform 250. A base portion 214 is positioned and fixed to the upper portions of the front surfaces of the first support plates 402.

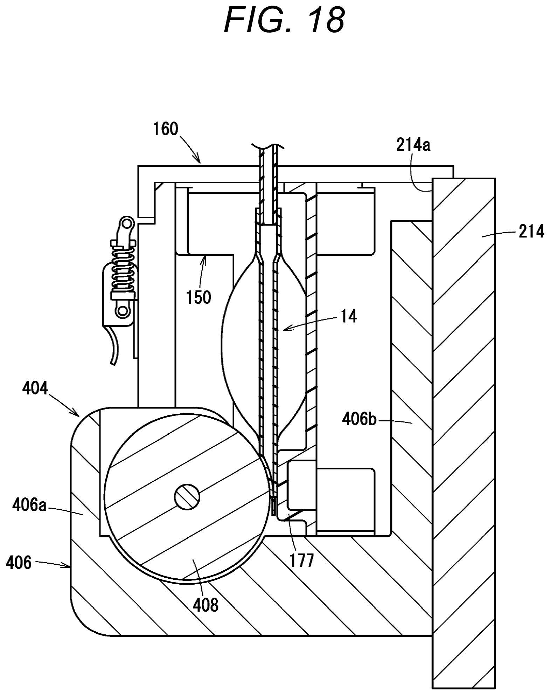

The kit holding portion 202 further includes a clamp portion 404. As illustrated in Fig. 18, the clamp portion 404 includes a U-shaped stay 406 and a roller 408. The rear surface of a rear end portion 406b of the U-shaped stay 406 is coupled to a front surface 214a of the base portion 214. Thus, the clamp portion 404 is supported by the base portion 214.

The roller 408 is rotatably supported by a front end portion 406a of the U-shaped stay 406. The roller 408 faces substantially the center of the lower edge portion of the collection bag 14 and covers a connection point (branch point) between the common flow path 24 and the first coupling flow path 26A and the second coupling flow path 26B. As a result, the most downstream of the common flow path 24, the most upstream of the first coupling flow path 26A, and the most upstream of the second coupling flow path 26B are crushed by the roller 408, and communication between the common flow path 24, the first coupling flow path 26A, and the second coupling flow path 26B is blocked.

Note that, in the collection kit jig 400, it is also possible to use the clamp portion 230 illustrated in Figs. 8, 10, and 15 instead of the clamp portion 404.

The elevation mechanism 420 includes an elevation operation portion 422, a first displacement portion 430, a first guide portion 450, the second displacement portion 470, a second guide portion 482, and a gear mechanism 490.

Two second support plates 410 are installed upright on the platform 250. The elevation operation portion 422 is provided at the upper portions of the front surfaces of the two second support plates 410. The elevation operation portion 422 is configured similarly to the elevation operation portion 320 in the second embodiment. Therefore, detailed description of the elevation operation portion 422 will be omitted. In the collection kit jig 300, in the initial state before an operation lever 324 is operated, one end of the operation lever 324 is inclined slightly upward from the horizontal direction (see Figs. 15 and 16). On the other hand, in the collection kit jig 400, as illustrated in Fig. 17, in the initial state before the operation lever 324 is operated, one end of the operation lever 324 is inclined so as to face slightly backward with respect to the vertical upper side.

The first displacement portion 430 includes a first movable board 432 and a first drive plate 434. The first movable board 432 and the first drive plate 434 move up and down integrally. The upward and downward movement of the first movable board 432 and the first drive plate 434 is guided by the first guide portion 450.

The first movable board 432 is a plate-shaped member extending along the width direction, and a nut with plate 436 is disposed at substantially the center in the width direction. A male screw portion 328a of the coupling rod 328 is screwed into a female screw of the nut with plate 436. The first movable board 432 has first insertion holes 438 at a left end and a right end, respectively. A cylindrical portion 440b of a first stopper 440 passes through each of the first insertion holes 438. The first stopper 440 is coupled to the first movable board 432 in a state where the upper surface of a large-diameter flange portion 440a of the first stopper 440 abuts on the lower surface of the first movable board 432.

Two first guide rods 452 constituting a first guide portion 450 are installed upright on the platform 250. Each of the two first guide rods 452 passes through a second insertion hole 454 of the first stopper 440. An upper portion of each of the two first guide rods 452 is exposed from the second insertion hole 454. A second stopper 456 is provided at the upper end of each of the two first guide rods 452.

The first guide rod 452 passes through a first return spring 458. The lower end of the first return spring 458 abuts on the upper surface of the first stopper 440. The upper end of the first return spring 458 abuts on the lower surface of the second stopper 456. The first return spring 458 biases the first movable board 432 downward via the first stopper 440.

The first drive plate 434 is an inverted L-shaped member having a first vertically long portion 434a extending along the up-down direction and a first upper end portion 434b extending along the front-back direction. The first vertically long portion 434a faces forward below the first movable board 432. The first upper end portion 434b is coupled to the lower surface of the first movable board 432.

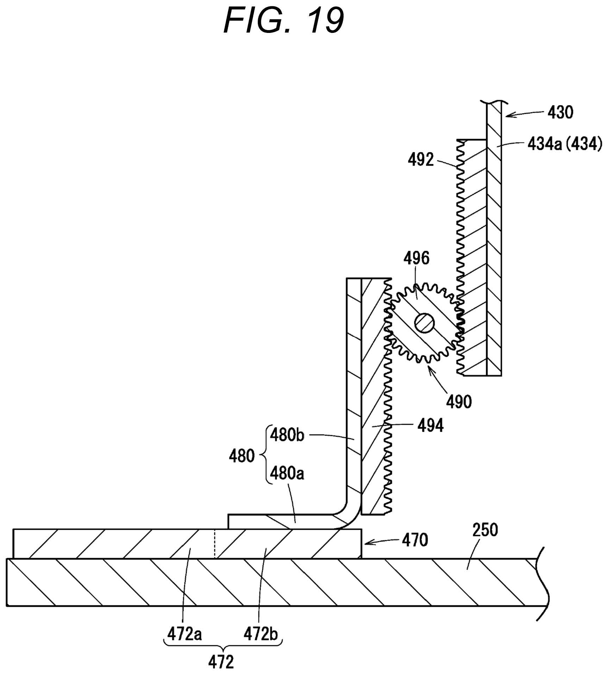

The second displacement portion 470 includes a second movable board 472. As illustrated in Figs. 17 and 19, the second movable board 472 includes a support seat portion 472a extending along the width direction and a tab portion 472b protruding backward from substantially the center of the support seat portion 472a in the width direction. Therefore, the second movable board 472 has a substantially T shape in a plan view seen from above to below.

As illustrated in Fig. 17, the first container holding portion 204A and the second container holding portion 204B are configured by a first container holder 207A and a second container holder 207B provided on the upper surface of the support seat portion 472a, respectively. The first container holder 207A and the second container holder 207B move up and down integrally with the second movable board 472. Note that, instead of the first container holder 207A and the second container holder 207B, the first container holding portion 204A and the second container holding portion 204B can be configured using a pedestal 252 illustrated in Fig. 8 and the like.

The support seat portion 472a of the second movable board 472 has third insertion holes (not illustrated) at the left end and the right end, respectively. The third insertion holes extend in the up-down direction. On the upper surface of the support seat portion 472a, third stoppers 474 are provided at the left end and the right end, respectively. Each of the third stoppers 474 has a fourth insertion hole 478 that is located above the third insertion hole so as to overlap the third insertion hole.

As illustrated in Fig. 19, a second drive plate 480 is provided on the upper surface of the tab portion 472b of the second movable board 472. The second drive plate 480 includes a second horizontal portion 480a extending in the front-back direction and a second vertically long portion 480b extending in the up-down direction. The second horizontal portion 480a is coupled to the tab portion 472b in a state where the lower surface of the second horizontal portion 480a abuts on the upper surface of the tab portion 472b. Therefore, the second movable board 472 moves up and down integrally with the second drive plate 480.

As illustrated in Fig. 17, two second guide rods 484 constituting the second guide portion 482 are installed upright on the platform 250. Each of the two second guide rods 484 passes through the third insertion hole and the fourth insertion hole 478. An upper portion of each of the two second guide rods 484 is exposed from the fourth insertion hole 478. A fourth stopper 486 is provided at the upper end of each of the two second guide rods 484.

Each of the second guide rods 484 passes through a second return spring 488. The lower end of the second return spring 488 abuts on the upper surface of the third stopper 474. The upper end of the second return spring 488 abuts on the lower surface of the fourth stopper 486. The second return spring 488 biases the second movable board 472 downward via the fourth stopper 486.

As illustrated in Fig. 19, the gear mechanism 490 includes a first rack 492, a second rack 494, and a pinion 496 that meshes with the first rack 492 and the second rack 494. The first rack 492 is disposed on the front surface of the lower portion of the first vertically long portion 434a of the first drive plate 434. The second rack 494 is disposed on the rear surface of the second vertically long portion 480b of the second drive plate 480. The pinion 496 is interposed between the first rack 492 and the second rack 494. Note that the pinion 496 is supported by an L-shaped stay 498 installed upright on the upper surface of the platform 250 via a bearing 500.

The collection kit jig 400 configured as described above is used as follows. In the third embodiment, a collection method of distributing the collection target M (see Fig. 12) to the sampling container 90 (see Fig. 14) using the collection kit 150 will be described.

In order to transfer the collection target M from the collection kit 150 to the first sampling container 90A and the second sampling container 90B, the user grips one end of the operation lever 324 and rotates the operation lever 324 so that the one end moves down in the direction of an arrow A in Fig. 17. Thus, the coupling rod 328 moves down.

As illustrated in Fig. 17, the male screw portion 328a of the coupling rod 328 is coupled to the first movable board 432 via the nut with plate 436, and the first drive plate 434 is coupled to the first movable board 432. Therefore, as the coupling rod 328 moves down, the first movable board 432 and the first drive plate 434 integrally move down.

As illustrated in Fig. 19, the first rack 492 provided in the first vertically long portion 434a of the first drive plate 434 meshes with the pinion 496, and the pinion 496 meshes with the second rack 494 provided in the second vertically long portion 480b of the second drive plate 480. Therefore, when the first movable board 432 and the first drive plate 434 move down, the pinion 496 is pushed downward by the first rack 492 and rotates. As a result, the second rack 494 is pushed upward by the pinion 496. Thus, the second drive plate 480 and the second movable board 472 to which the second drive plate 480 is coupled integrally move up.

When the second movable board 472 moves up, the second return spring 488 disposed between the third stopper 474 and the fourth stopper 486 is compressed in the axial direction. That is, the second movable board 472 moves up against the elastic force of the second return spring 488.

The first container holding portion 204A and the second container holding portion 204B ascend integrally with the second movable board 472. As a result, the first sampling container 90A is connected to the first adapter 40A, and the second sampling container 90B is connected to the second adapter 40B. A needle pipe 46 of the first adapter 40A penetrates a plug 93 (see Fig. 17) of the first sampling container 90A, and the needle pipe 46 of the second adapter 40B penetrates the plug 93 of the second sampling container 90B. Thereafter, the first connection member 62A and the second connection member 62B are opened by the same operation as in the first embodiment. Along with this, a first sample MS1 is introduced into the first sampling container 90A (see Fig. 14), and a second sample MS2 is introduced into the second sampling container 90B.

Next, as illustrated in Fig. 17, the user rotates the operation lever 324 so that one end of the operation lever 324 is raised. Thus, the second return spring 488 is released from the force to compress the second return spring 488 upward. Therefore, the second return spring 488 extends by elasticity. Accordingly, the second movable board 472 is biased downward by the second return spring 488 via the third stopper 474. As a result, the second movable board 472, the first container holding portion 204A, and the second container holding portion 204B integrally move down. With the downward movement of the first container holding portion 204A and the second container holding portion 204B, the first adapter 40A is removed from the first sampling container 90A and the second adapter 40B is removed from the second sampling container 90B. Through the above processes, the collection (sampling) of the collection target M using the collection kit 150 is completed.

Note that, as the second movable board 472 moves down, the second rack 494 pushes the pinion 496 downward and the pinion 496 pushes the first rack 492 upward, contrary to the above. As a result, the first drive plate 434 and the first movable board 432 move up and return to the original positions.

The collection kit jig 400 according to the third embodiment has the same effect as the collection kit jig 200 according to the first embodiment.

### (5) Fourth embodiment

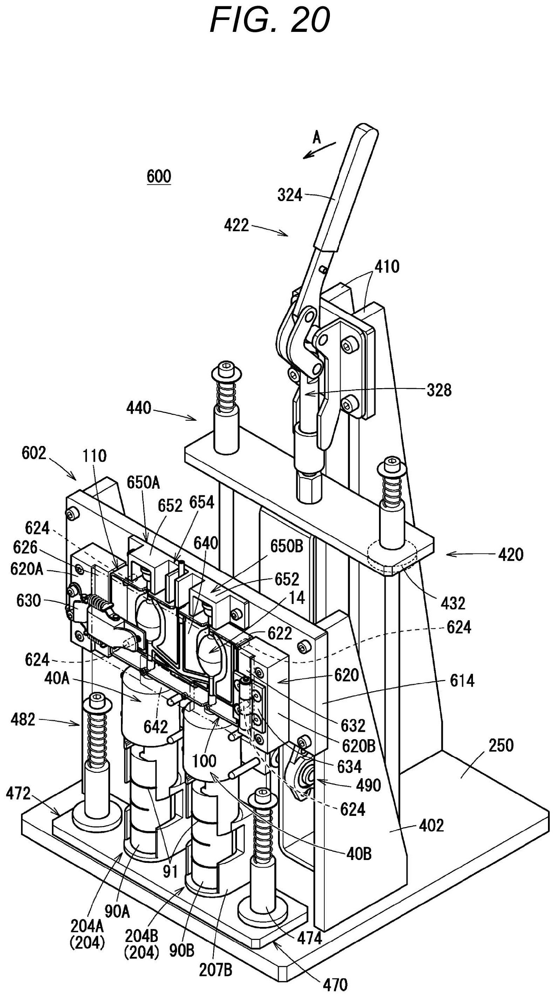

Next, a configuration of a collection kit jig 600 according to a fourth embodiment will be described with reference to Figs. 20 to 22. Here, the collection kit jig 600 according to the fourth embodiment is configured similarly to the collection kit jig 400 according to the third embodiment except that a kit holding portion 602 is provided instead of a kit holding portion 202. Therefore, in the collection kit jig 600 according to the fourth embodiment, the same components as those illustrated in Figs. 1 to 19 are denoted by the same reference numerals in Figs. 20 to 22, and the detailed description thereof will be omitted.

Note that, in the fourth embodiment, an aspect in which the collection kit 100 illustrated in Fig. 1 is fixed to the kit holding portion 602 is exemplified.

As illustrated in Fig. 20, the collection kit jig 600 includes a kit holding portion 602, a first container holding portion 204A, a second container holding portion 204B, and an elevation mechanism 420. As described above, the configurations of the first container holding portion 204A, the second container holding portion 204B, and the elevation mechanism 420 are similar to those of the collection kit jig 400 according to the third embodiment.

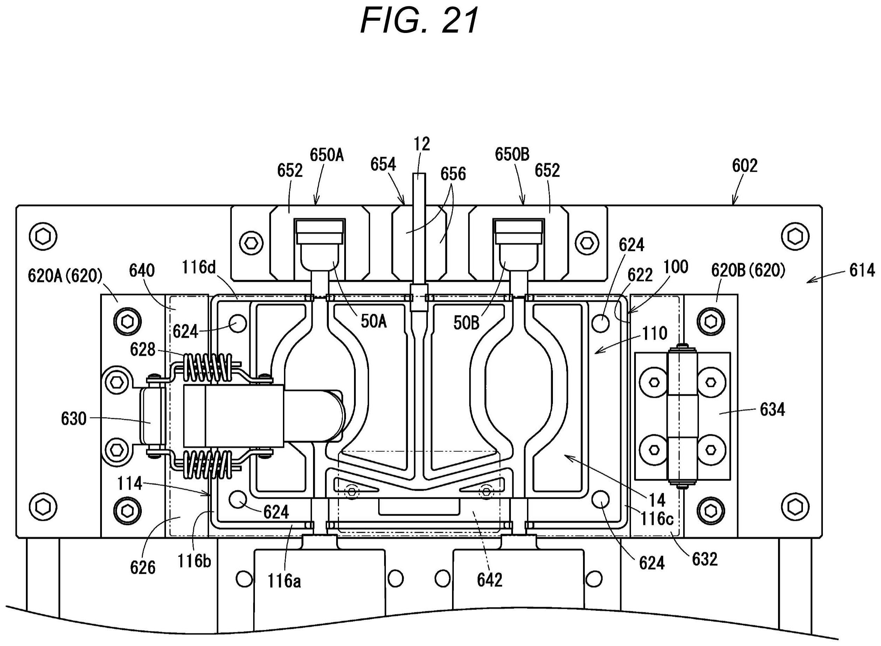

As illustrated in Fig. 21, the kit holding portion 602 includes a base portion 614 and plurality of retainers 620. The plurality of retainers 620 includes a first retainer 620A and a second retainer 620B. The first retainer 620A is disposed at the left portion of the base portion 614, and the second retainer 620B is disposed at the right portion of the base portion 614. The front surface of the base portion 614, the first retainer 620A, and the second retainer 620B define a housing space 622 for housing a holder 110, similarly to the first embodiment to the third embodiment. When the collection kit 100 is housed in the housing space 622, a main wall portion 112 and the peripheral wall portion 114 of the holder 110 are surrounded by the front surface of the base portion 614, the right inner surface of the first retainer 620A, and the left inner surface of the second retainer 620B.

The kit holding portion 602 includes a plurality of holding pins 624. In the illustrated example, the number of the holding pins 624 is four, but the number of the holding pins 624 is not limited to four. The holding pins 624 protrude forward from the front surface of the base portion 614 in the housing space 622. The holding pins 624 are respectively engaged with four holding holes provided in the holder 110. Thus, the collection kit 100 is fixed to the kit holding portion 602.

The first retainer 620A has a first step portion 626 in the right front portion. On the front surface of the first retainer 620A, a hook 630 for fastening a fastener 628 is provided on the left of the first step portion 626. The second retainer 620B has a second step portion 632 in the left front portion. On the front surface of the second retainer 620B, a hinge 634 is provided on the right of the second step portion 632.

The left end portion and the right end portion of a cover 640 are engaged with the first step portion 626 and the second step portion 632, respectively. The fastener 628 is provided at the left end of the cover 640. The hinge 634 is coupled to the right end of the cover 640. The cover 640 is rotatable via the hinge 634. The state in which the left end of the cover 640 abuts on the first step portion 626 is the closed state, and the state in which the left end of the cover 640 is away from the first step portion 626 is the open state. When the cover 640 is in the closed state, the fastener 628 is fastened to the hook 630. Accordingly, the cover 640 is maintained in the closed state.

The cover 640 is preferably transparent or semitransparent. In this case, the user can view a collection bag 14 via the cover 640. Therefore, it is easy to confirm whether or not the collection target M has moved from a first housing chamber 28A and a second housing chamber 28B to a first sampling container 90A and a second sampling container 90B.

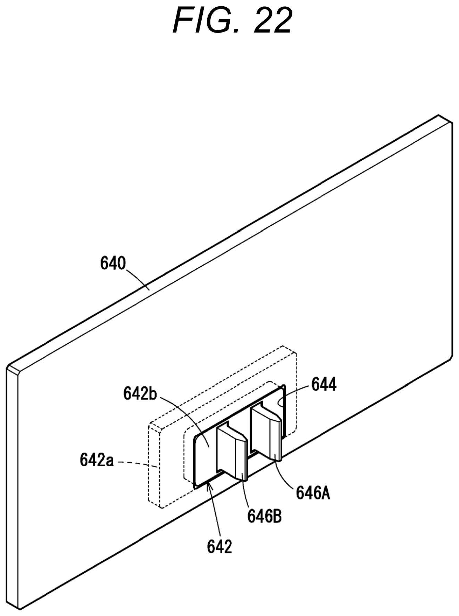

The cover 640 is provided with a clamp portion 642. As illustrated in Fig. 22, a rectangular fitting hole 644 penetrating along the front-back direction (thickness direction) is formed in the cover 640. The clamp portion 642 includes a large plate portion 642a larger than the fitting hole 644, a small plate portion 642b having a shape corresponding to the shape of the fitting hole 644, and a first projecting portion 646A and a second projecting portion 646B. The small plate portion 642b protrudes backward from the reverse surface of the large plate portion 642a. The small plate portion 642b and the large plate portion 642a have substantially similar shapes. The first projecting portion 646A and the second projecting portion 646B protrude backward from the reverse surface of the small plate portion 642b. The first projecting portion 646A and the second projecting portion 646B extend along the up-down direction.

The small plate portion 642b is fitted into the fitting hole 644. The large plate portion 642a is exposed from the fitting hole 644 and positioned in front of the cover 640. On the reverse surface of the large plate portion 642a, a portion other than the portion where the small plate portion 642b protrudes abuts on the front surface of the cover 640. The first projecting portion 646A and the second projecting portion 646B are exposed from the fitting hole 644 and positioned behind the cover 640. When the cover 640 is in the closed state, the first projecting portion 646A collapses the first coupling flow path 26A in the collection bag 14, and blocks communication between the first coupling flow path 26A and the common flow path 24. Simultaneously, the second projecting portion 646B collapses the second coupling flow path 26B in the collection bag 14, and blocks communication between the second coupling flow path 26B and the common flow path 24.

As illustrated in Fig. 21, a first exhaust valve shielding portion 650A, a tube support portion 654, and a second exhaust valve shielding portion 650B are integrally provided in an upper portion of a front surface 614a of the base portion 614. The tube support portion 654 is positioned between the first exhaust valve shielding portion 650A and the second exhaust valve shielding portion 650B in the width direction of the base portion 614.

The first exhaust valve shielding portion 650A is an enclosure having a roof portion 652. The roof portion 652 covers a first exhaust valve 50A from above. The upper surface of the first exhaust valve 50A and the lower surface of the roof portion 652 are slightly away from each other. Accordingly, the first exhaust valve 50A is prevented from being closed by the roof portion 652. The same applies to the roof portion 652 of the second exhaust valve shielding portion 650B and the upper surface of a second exhaust valve 50B.

The tube support portion 654 has a pair of convex portions 656 protruding forward. An inflow tube 12 of the collection kit 100 is held between the pair of convex portions 656. Thus, the inflow tube 12 is supported by the tube support portion 654.

The collection kit jig 600 configured as described above is used as follows. In the fourth embodiment, a collection method of distributing the collection target M (see Fig. 12) to the sampling container 90 (see Fig. 14) using the collection kit 100 will be described.

The user opens the cover 640 and inserts the holder 110 into the housing space 622. During insertion, the four holding pins 624 of the kit holding portion 602 are respectively engaged with the four holding holes 115 provided in the holder 110. Thus, the collection kit 100 is fixed to (held by) the kit holding portion 602.

Next, the user rotates the cover 640 to close the cover 640, and secures the fastener 628 to the hook 630. Accordingly, the cover 640 is maintained in the closed state.

The operation of transferring the collection target M from the collection kit 100 to the first sampling container 90A and the second sampling container 90B is the same as that in the third embodiment. Therefore, description of the collection method is omitted.

The collection kit jig 600 according to the fourth embodiment has the following effects.

As illustrated in Figs. 1 and 4, the holder 110 has the plurality of holding holes 115. As illustrated in Fig. 20, the kit holding portion 602 includes the plurality of holding pins 624 to be inserted into the plurality of holding holes 115, respectively. In the illustrated example, the plurality of holding pins 624 protrude forward from the base portion 614.

In this case, the collection kit 100 can be positioned and fixed to the kit holding portion 602 with a simple structure.

The collection kit 100 includes an exhaust valve 50 provided in each of a plurality of exhaust flow paths 32. The kit holding portion 602 includes the first exhaust valve shielding portion 650A and the second exhaust valve shielding portion 650B that cover the upper side of the exhaust valve 50.

The first exhaust valve shielding portion 650A and the second exhaust valve shielding portion 650B prevent air from flowing into the exhaust flow path 32 via the exhaust valve 50. Therefore, since the housing chamber 28 of the collection bag 14 is maintained at a negative pressure, it is easy to transfer the collection target M from the medical bag 80 (see Fig. 12) to the housing chamber 28.

### (6) Fifth embodiment

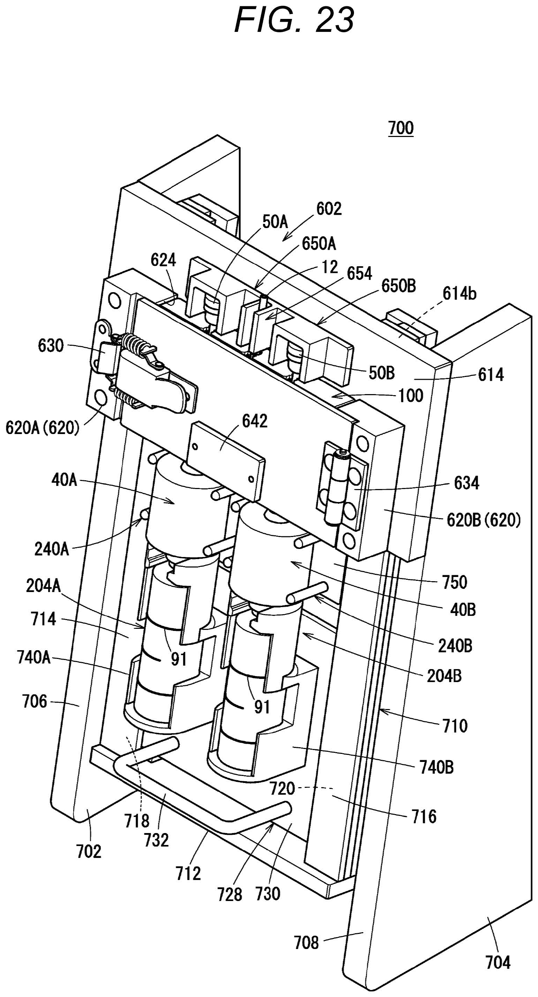

Next, a configuration of a collection kit jig 700 according to a fifth embodiment will be described with reference to Fig. 23. Note that the collection kit jig 700 according to the fifth embodiment includes a kit holding portion 602, a cover 640, a clamp portion 642, a first exhaust valve shielding portion 650A, a second exhaust valve shielding portion 650B, and a tube support portion 654 illustrated in Figs. 20 to 22. Therefore, in the collection kit jig 700 according to the fifth embodiment, the same components as those illustrated in Figs. 1 to 22 are denoted by the same reference numerals in Fig. 23, and the detailed description thereof will be omitted.

In the fifth embodiment, an aspect in which the elevation direction of a first container holding portion 204A and a second container holding portion 204B is inclined with respect to the vertical direction is exemplified. In addition, in this aspect, a collection kit 100 is fixed to the kit holding portion 602.

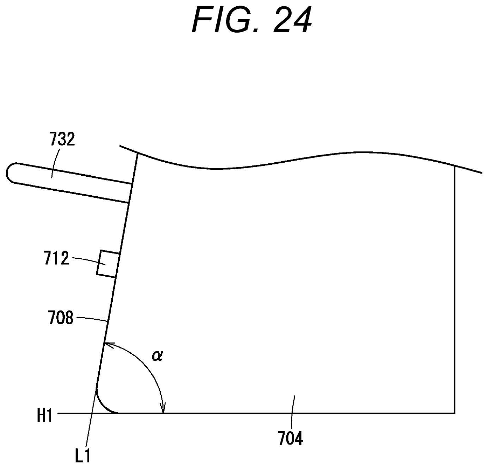

As illustrated in Fig. 23, the collection kit jig 700 includes a vertically long first leg portion 702 and a second leg portion 704 that have a substantially trapezoidal shape. The first leg portion 702 and the second leg portion 704 have a first inclined surface 706 and a second inclined surface 708, respectively. The first inclined surface 706 and the second inclined surface 708 are surfaces inclined from the lower side to the upper side from the front side to the back side. As illustrated in Fig. 24, an axis L1 of the first inclined surface 706 and the second inclined surface 708 intersects a horizontal line H1 extending along the front-back direction at an intersection angle α. The intersection angle α is, for example, 70° to 80°.

A base portion 614 constituting the kit holding portion 602 is positioned and fixed so as to straddle the upper portion of the first inclined surface 706 and the upper portion of the second inclined surface 708. Therefore, the intersection angle between the axis along the inclination of the kit holding portion 602 and the horizontal line H1 extending along the front-back direction is, for example, 70° to 80°, similarly to the intersection angle α.

The collection kit jig 700 includes an elevation mechanism 728. The elevation mechanism 728 includes a guide frame 710, a sliding board 730, and a handle 732 gripped by a user.

The upper portion of the guide frame 710 is coupled to a rear surface 614b of the base portion 614. The guide frame 710 is positioned between the first leg portion 702 and the second leg portion 704, and is inclined from the lower side to the upper side from the front side to the back side. The intersection angle between the axis along the inclination of the guide frame 710 and the horizontal line extending along the front-back direction is, for example, 70° to 80°, similarly to the kit holding portion 602.

The guide frame 710 includes a base plate 712 extending along the width direction, and a first guide plate 714 and a second guide plate 716 provided at the left end and the right end of the base plate 712, respectively. The first guide plate 714 has a first U-shaped groove 718 opened to the right surface facing the second guide plate 716. The first U-shaped groove 718 is a groove recessed outward (leftward) in the width direction from the right surface of the first guide plate 714. The second guide plate 716 has a second U-shaped groove 720 opened to the left surface facing the first guide plate 714. The second U-shaped groove 720 is a groove recessed outward (rightward) in the width direction from the left surface of the second guide plate 716.

The left end and the right end of the sliding board 730 are slidably inserted into the first U-shaped groove 718 and the second U-shaped groove 720, respectively. The handle 732 is provided on the front surface of the sliding board 730.

The sliding board 730 is movable along the up-down direction (the inclination direction of the guide frame 710). Specifically, in a case where the user grips the handle 732 and pushes up the handle 732, the sliding board 730 moves up along the inclination of the guide frame 710 while being guided by the first guide plate 714 and the second guide plate 716. In a case where the user grips the handle 732 and pushes down the handle 732, the sliding board 730 moves down along the inclination of the guide frame 710 while being guided by the first guide plate 714 and the second guide plate 716.

The first container holding portion 204A and the second container holding portion 204B are provided above the handle 732 on the front surface of the sliding board 730. In the fifth embodiment, the first container holding portion 204A and the second container holding portion 204B are configured by a first container holder 740A and a second container holder 740B, respectively. As the sliding board 730 moves up and down as described above, the first container holding portion 204A and the second container holding portion 204B move up and down integrally with the sliding board 730.

In the fifth embodiment, the first adapter support portion 240A and the second adapter support portion 240B are provided on the stationary board 750. The stationary board 750 is coupled to the base portion 614 in a state where the front surface of the stationary board 750 abuts on the rear surface 614b of the base portion 614. That is, the stationary board 750 is positioned and fixed to the base portion 614. Therefore, the stationary board 750 does not move up or down. Therefore, the first adapter support portion 240A and the second adapter support portion 240B also do not move up or down.

The collection kit jig 700 configured as described above is used as follows. In the fifth embodiment, a collection method of distributing the collection target M (see Fig. 12) to the sampling container 90 (see Fig. 14) using the collection kit 100 will be described.

The user fixes the collection kit 100 to the kit holding portion 602 in the same manner as in the fourth embodiment. Next, the user grips the handle 732 and pushes the sliding board 730 upward. As a result, the sliding board 730, the first container holding portion 204A, and the second container holding portion 204B integrally move up. As a result, the first sampling container 90A is connected to the first adapter 40A, and the second sampling container 90B is connected to the second adapter 40B. A needle pipe 46 of the first adapter 40A penetrates a plug 93 of the first sampling container 90A, and the needle pipe 46 of the second adapter 40B penetrates the plug 93 of the second sampling container 90B. Thereafter, the first connection member 62A and the second connection member 62B are opened by the same operation as in the first embodiment. Along with this, a first sample MS1 is introduced into the first sampling container 90A (see Fig. 14), and a second sample MS2 is introduced into the second sampling container 90B.

Next, the user grips the handle 732 and pushes the sliding board 730 downward. As a result, the sliding board 730, the first container holding portion 204A, and the second container holding portion 204B integrally move down. With the downward movement of the first container holding portion 204A and the second container holding portion 204B, the first adapter 40A is removed from the first sampling container 90A and the second adapter 40B is removed from the second sampling container 90B. Through the above processes, the collection (sampling) of the collection target M using the collection kit 100 is completed.

The collection kit jig 700 according to the fifth embodiment has the same effect as the collection kit jig 600 according to the fourth embodiment.

### (7) Sixth embodiment

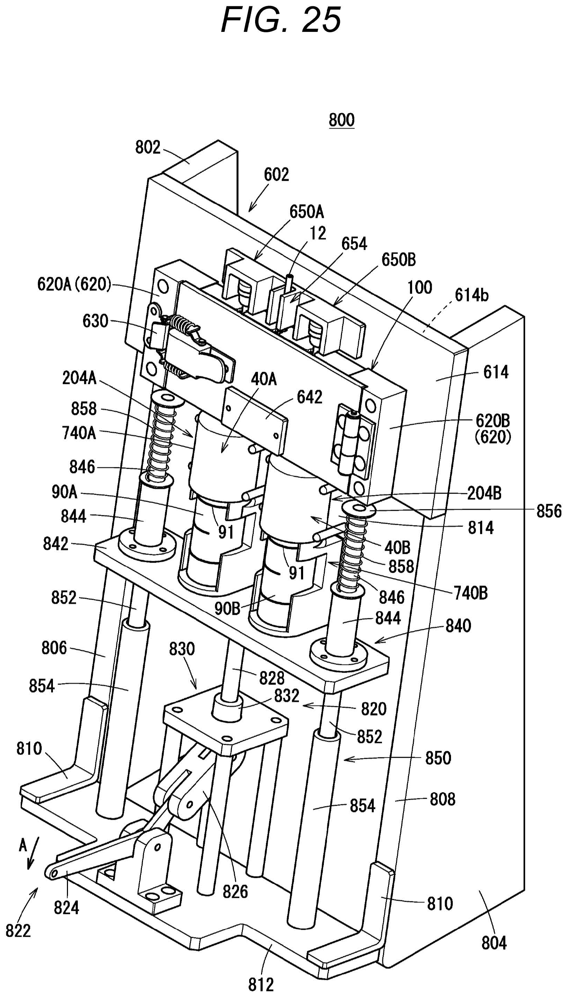

Next, a configuration of a collection kit jig 800 according to a sixth embodiment will be described with reference to Fig. 25. Note that the collection kit jig 800 according to the sixth embodiment includes a kit holding portion 602, a cover 640, a clamp portion 642, a first exhaust valve shielding portion 650A, a second exhaust valve shielding portion 650B, and a tube support portion 654 illustrated in Figs. 20, 21, and 23. Therefore, in the collection kit jig 800 according to the sixth embodiment, the same components as those illustrated in Figs. 1 to 24 are denoted by the same reference numerals in Fig. 25, and the detailed description thereof will be omitted.

In the sixth embodiment, an aspect in which the elevation direction of a first container holding portion 204A and a second container holding portion 204B is inclined with respect to the vertical direction is exemplified. In addition, in this aspect, a collection kit 100 is fixed to the kit holding portion 602.

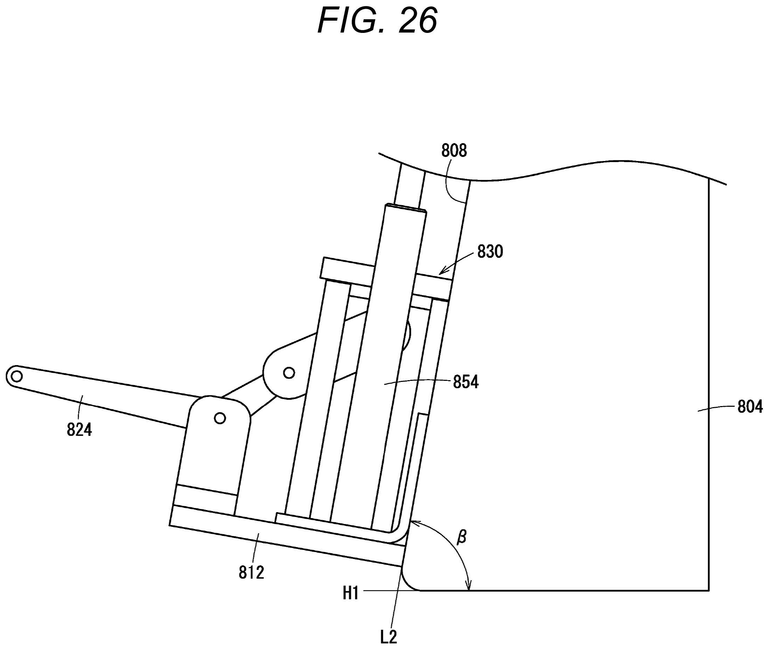

As illustrated in Fig. 25, the collection kit jig 800 includes a first leg portion 802 and a second leg portion 804 installed upright on the upper surface of the platform. The first leg portion 802 and the second leg portion 804 have a vertically long trapezoidal shape. The first leg portion 802 and the second leg portion 804 have a first inclined surface 806 and a second inclined surface 808, respectively. The first inclined surface 806 and the second inclined surface 808 are surfaces inclined from the lower side to the upper side from the front side to the back side. As illustrated in Fig. 26, an axis L2 of the first inclined surface 806 and the second inclined surface 808 intersects a horizontal line H1 extending along the front-back direction at an intersection angle β. The intersection angle β is, for example, 70° to 80°.

An L-shaped bracket 810 is attached to the lower portion of each of first inclined surface 806 and second inclined surface 808. A first stationary board 812 is supported by the first leg portion 802 and the second leg portion 804 via the L-shaped bracket 810. That is, the first stationary board 812 is positioned and fixed so as to straddle the lower portion of the first inclined surface 806 and the lower portion of the second inclined surface 808. The first stationary board 812 is a plate-shaped member inclined from the upper side to the lower side from the front side to the back side.

A base portion 614 constituting the kit holding portion 602 is positioned and fixed so as to straddle the upper portion of the first inclined surface 806 and the upper portion of the second inclined surface 808. Therefore, the intersection angle between the axis along the inclination of the kit holding portion 602 and the horizontal line H1 extending along the front-back direction is, for example, 70° to 80°, similarly to the intersection angle β.

A second stationary board 814 is attached to a rear surface 614b of the base portion 614. The second stationary board 814 is coupled to the base portion 614 in a state where the front surface of the second stationary board 814 abuts on the rear surface 614b of the base portion 614. Therefore, the second stationary board 814 does not move up or down. Therefore, the first adapter support portion 240A and the second adapter support portion 240B provided on the second stationary board 814 also do not move up or down.

The collection kit jig 800 includes an elevation mechanism 820. The elevation mechanism 820 includes an elevation operation portion 822, a displacement portion 840, and a guide portion 850.

The elevation operation portion 822 is provided on the upper surface of the first stationary board 812. The elevation operation portion 822 includes an operation lever 824 bent in a substantially V shape, and an elevation rod 828 coupled to one end of the operation lever 824 via a link 826. Here, a frame-shaped support portion 830 is provided on the upper surface of the first stationary board 812. The elevation rod 828 is passed through a bush 832 supported by the frame-shaped support portion 830. The elevation rod 828 extends substantially parallel to the first inclined surface 806 and the second inclined surface 808.

The displacement portion 840 includes a movable board 842. The movable board 842 is a plate-shaped member extending along the width direction. The upper end of the elevation rod 828 is coupled to a substantially center in the width direction on the lower surface of the movable board 842. The movable board 842 has first insertion holes at a left end and a right end, respectively. On the upper surface of the movable board 842, first stoppers 844 are provided at the left end and the right end, respectively. Each of the first stoppers 844 has a second insertion hole 846 that is located above the first insertion hole so as to overlap the first insertion hole.

The upward and downward movement of the movable board 842 is guided by the guide portion 850. Two guide rods 852 constituting the guide portion 850 are installed upright on the first stationary board 812. The two guide rods 852 extend substantially parallel to the elevation rod 828, the first inclined surface 806, and the second inclined surface 808. The lower portion of each of the two guide rods 852 is protected by being covered with a sleeve 854. The upper portion of each of the two guide rods 852 passes through the first insertion hole of the movable board 842 and the second insertion hole 846 of the first stopper 844 and is exposed from the second insertion hole 846. A second stopper 856 is provided at the upper end of each of the two guide rods 852.

The guide rod 852 passes through a return spring 858. The lower end of the return spring 858 abuts on the upper surface of the second stopper 856. The upper end of the return spring 858 abuts on the lower surface of the second stopper 856. The return spring 858 biases the movable board 842 downward via the first stopper 844.

In the sixth embodiment, the first container holding portion 204A and the second container holding portion 204B are configured by a first container holder 740A and a second container holder 740B provided on the upper surface of the movable board 842, respectively. The first container holder 740A and the second container holder 740B move up and down integrally with the movable board 842. Note that, instead of the first container holder 740A and the second container holder 740B, the first container holding portion 204A and the second container holding portion 204B can be configured using a pedestal 252 illustrated in Fig. 8 and the like.

The collection kit jig 800 configured as described above is used as follows. In the sixth embodiment, a collection method of distributing the collection target M (see Fig. 12) to the sampling container 90 (see Fig. 14) using the collection kit 100 will be described.

The user fixes the collection kit 100 to the kit holding portion 602 in the same manner as in the fourth and fifth embodiments. Specifically, the user grips the upper end of the operation lever 824 and rotates the operation lever 824 forward to lower this upper end in an arrow A in Fig. 25. As a result, the elevation rod 828 moves up. Since the elevation rod 828 is coupled to the movable board 842, the movable board 842 integrally moves up with the elevation rod 828 as the elevation rod 828 moves up. As the movable board 842 moves up, the return spring 858 is compressed in the axial direction. That is, the movable board 842 moves up against the elastic force of the return spring 858.

The first container holding portion 204A and the second container holding portion 204B ascend integrally with the movable board 842. As a result, the first sampling container 90A is connected to the first adapter 40A, and the second sampling container 90B is connected to the second adapter 40B. A needle pipe 46 of the first adapter 40A penetrates a plug 93 of the first sampling container 90A, and the needle pipe 46 of the second adapter 40B penetrates the plug 93 of the second sampling container 90B. Thereafter, the first connection member 62A and the second connection member 62B are opened by the same operation as in the first embodiment. Along with this, a first sample MS1 is introduced into the first sampling container 90A (see Fig. 14), and a second sample MS2 is introduced into the second sampling container 90B.

Next, the user grips the upper end of the operation lever 824 illustrated in Fig. 25, and rotates the operation lever 824 backward so that the upper end moves up in the opposite direction to the above. Thus, the return spring 858 is released from the force to compress the return spring 858 upward. Therefore, the return spring 858 extends by elasticity. Accordingly, the movable board 842 is biased downward by the return spring 858 via the first stopper 844. As a result, the movable board 842, the first container holding portion 204A, and the second container holding portion 204B integrally move down. With the downward movement of the first container holding portion 204A and the second container holding portion 204B, the first adapter 40A is removed from the first sampling container 90A and the second adapter 40B is removed from the second sampling container 90B. Through the above processes, the collection (sampling) of the collection target M using the collection kit 100 is completed.

The collection kit jig 800 according to the sixth embodiment has the same effect as the collection kit jig 600 according to the fourth embodiment.

### (8) Modification

Other possible modifications will be briefly described below.

The user may fix the collection kit 100 to the kit holding portion 202 in the same manner as in the first and second embodiments. The user may fix the collection kit 150 to the kit holding portion 602 in the same manner as in the fifth and sixth embodiments. The user may use the clamp portion 404 illustrated in Figs. 17 and 18 in the first and second embodiments. The user may use the clamp portion 230 illustrated in Figs. 8 and 15 in the third embodiment. In this manner, the components of the first to sixth embodiments may be replaced with each other.

In the first to sixth embodiments, the user operates the operation levers 288, 324, and 824 or the handle 732 to move the kit holding portions 202 and 602 up and down relative to the container holding portion 204. Alternatively, the kit holding portions 202 and 602 may be moved up and down relative to the container holding portion 204 by an actuator such as a ball screw or a motor.

In the first to sixth embodiments, the collection kit jigs 200, 300, 400, 600, 700, and 800 including one operation portion (operation levers 288, 324, and 824 or handle 732) and one kit holding portion 202 (or one kit holding portion 602) are exemplified. On the other hand, the collection kit jig may be configured to include the plurality of kit holding portions 202 (or kit holding portions 602). In this case, the number of the container holding portions 204 corresponds to the number of the housing chambers 28. When the user operates one operation portion, all the kit holding portions 202 (or the kit holding portions 602) are moved up and down relative to the container holding portion 204 at the same time.

The first electronic balance, the second electronic balance, the first weight indicator, and the second weight indicator can also be provided in the second to sixth embodiments. For example, in the case of the collection kit jig 300 according to the second embodiment, the first electronic balance and the second electronic balance can be provided directly below the two container holding grooves 205 in the pedestal 252, similarly to the first embodiment. In case of the collection kit jig 400 according to the third embodiment, the first electronic balance and the second electronic balance can be provided on, for example, the second movable board 472.

Specifically, the support seat portion 472a of the second movable board 472 includes a main body provided with a first electronic balance and a second electronic balance, and a sliding shelf that can be pulled out forward with respect to the main body. The sliding shelf is positioned directly below the first container holder 207A and the second container holder 207B, and covers the first electronic balance and the second electronic balance when stored in the main body. On the other hand, when the sliding shelf is pulled out from the main body, the first electronic balance and the second electronic balance are exposed. A through hole is formed at the bottom portion of each of the first container holder 207A and the second container holder 207B.

In this configuration, when the collection target M is transferred from the first housing chamber 28A and the second housing chamber 28B of the collection bag 14 to the first sampling container 90A and the second sampling container 90B, respectively, the sliding shelf is pulled forward with respect to the main body. Accordingly, the bottom portion of the first sampling container 90A and the bottom portion of the second sampling container 90B pass through the through holes and come into contact with the first electronic balance and the second electronic balance, respectively. As a result, the weight of the collection target M in the first sampling container 90A and the collection target M in the second sampling container 90B are individually measured.

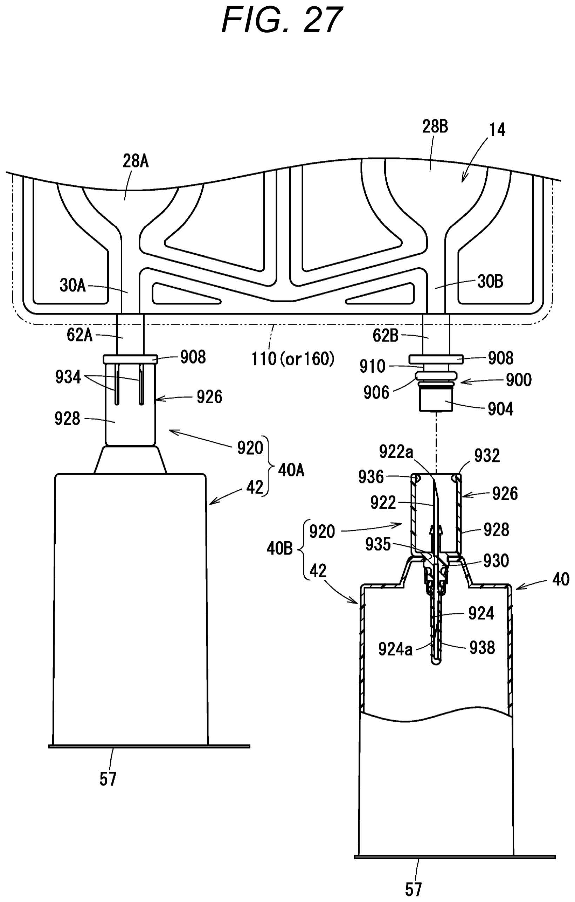

Further variations include a configuration in which the first adapter 40A and the second adapter 40B are detachable with respect to the collection bag 14. This configuration will be described with reference to Fig. 27. Note that the same components as those illustrated in Figs. 1 to 6 are denoted by the same reference numerals, and a detailed description of the components is omitted.

In this configuration, a needle connector 900 for closing the first outflow path 30A is attached to the collection bag 14. On the other hand, the first adapter 40A includes the adapter body 42 and a needle unit 920. The adapter body 42 is connected to the first outflow path 30A via the first connection member 62A, the needle connector 900, and the needle unit 920.

The needle connector 900 has a fitting pipe portion (not illustrated) facing the collection bag 14. The fitting pipe portion is inserted into the first connection member 62A. The needle connector 900 has a cap attachment pipe portion (not illustrated) facing the adapter body 42. The cap attachment pipe portion is closed by a rubber cap 904. The rubber cap 904 prevents the collection target M in the first housing chamber 28A from leaking through the needle connector 900 before the adapter body 42 is attached to the collection bag 14. The upper surface of the rubber cap 904 abuts, for example, the lower surface of a first flange portion 906 constituting the needle connector 900.

The needle connector 900 further includes a second flange portion 908. The second flange portion 908 is positioned between the first flange portion 906 and the fitting pipe portion in the axial direction of the needle connector 900. An annular groove 910 is formed between the first flange portion 906 and the second flange portion 908.

The needle unit 920 includes a first needle 922, a second needle 924, and a needle hub 926. The needle hub 926 includes a cylindrical cup portion 928 having a hollow inside and an adapter holding portion 930. The cup portion 928 has a cup opening 932 formed at one end portion facing the needle connector 900 in the cup portion 928 and a slit 934 extending along the axial direction of the cup portion 928 starting from the cup opening 932. Therefore, when the rubber cap 904 is inserted into the hollow inside of the cup portion 928 through the cup opening 932, one end portion of the cup portion 928 is easily expanded based on the elastic deformation.

The needle hub 926 further includes a claw portion 936. The claw portion 936 is provided at the inner edge of the cup opening 932 in the cup portion 928 and protrudes inward in the diametrical direction of the cup portion 928.

The adapter holding portion 930 has a smaller diameter than the cup portion 928. The adapter holding portion 930 is positioned at the other end portion opposite to the one end portion where the cup opening 932 is formed in the axial direction of the cup portion 928. The other end portion is an end portion away from the needle connector 900 in the cup portion 928.

The first needle 922 is held by the needle hub 926 with a blade tip 922a facing the needle connector 900. The blade tip 922a of the first needle 922 is positioned in the hollow inside of the cup portion 928. The second needle 924 is held by the needle hub 926 with a blade tip 924a facing in the opposite direction to the blade tip 922a of the first needle 922. Most of the second needle 924 is exposed from the adapter holding portion 930. In the second needle 924, a portion exposed from the adapter holding portion 930 is covered with a rubber cover 938. The lumen of the first needle 922 and the lumen of the second needle 924 communicate with each other.

An insertion hole 935 is formed at one end portion facing the needle connector 900 in the axial direction of the adapter body 42. The adapter holding portion 930 is fitted into the insertion hole 935. The needle unit 920 and the adapter body 42 are assembled in advance by this fitting to constitute the first adapter 40A.

The second outflow path 30B and the second adapter 40B are connected in the same manner as described above. Note that the same components are denoted by the same reference numerals, and the detailed description thereof will be omitted. That is, the adapter body 42 of the second adapter 40B is connected to the second outflow path 30B via the second connection member 62B, the needle connector 900, and the needle unit 920.

The needle unit 920 and the adapter body 42 are connected to the needle connector 900 by fitting the rubber cap 904 to the cup portion 928 of the needle hub 926. When the edge portion of the cup portion 928 abuts on the second flange portion 908 of the needle connector 900, the fitting of the rubber cap 904 to the cup portion 928 ends. At the time of this fitting, the blade tip 922a of the first needle 922 penetrates the rubber cap 904 and reaches the inside of the cap attachment pipe portion of the needle connector 900. In addition, the claw portion 936 of the cup portion 928 is engaged with the annular groove 910 of the needle connector 900. This engagement prevents the needle hub 926 from falling out of the needle connector 900.

When the neck portion of the first sampling container 90A (see Fig. 8) is inserted into the adapter body 42 of the first adapter 40A, the blade tip 924a of the second needle 924 penetrates the plug 93 of the first sampling container 90A. Therefore, when the first connection member 62A is opened as described above, the first sampling container 90A and the first housing chamber 28A communicate with each other via the first outflow path 30A, the internal path of the first connection member 62A, the internal path of the needle connector 900, the lumen of the first needle 922, and the lumen of the second needle 924. Therefore, the collection target M in the first housing chamber 28A moves to the first sampling container 90A.

Note that the rubber cover 938 is compressed by being pushed toward the collection bag 14. The blade tip 924a of the second needle 924 penetrates the compressed rubber cover 938. When the blade tip 924a of the second needle 924 comes out of the plug 93 of the first sampling container 90A, the rubber cover 938 stretches by its elastic restoring force and covers the second needle 924 again.

Also in the second sampling container 90B in which the neck portion is inserted into the adapter body 42 of the second adapter 40B, the collection target M in the second housing chamber 28B moves to the second sampling container 90B in the same manner as described above. As understood from the above, also in the collection kit 100 in which the first adapter 40A and the second adapter 40B are detachable with respect to the collection bag 14, the collection target M can be transferred from the first housing chamber 28A and the second housing chamber 28B to the first sampling container 90A and the second sampling container 90B, respectively.

Note that, the present invention is not limited to the above disclosure, and various configurations can be adopted without departing from the gist of the present invention.

## Claims

1. A collection kit jig used to connect a collection kit to a sampling container, wherein
the collection kit includes an inflow tube to which a medical bag housing a collection target is connected, a collection bag, and a holder holding the collection bag,
the collection bag includes a housing chamber connected to a downstream of the inflow tube to house the collection target, and an outflow path that is connected to a downstream of the housing chamber to allow the collection target to flow out of the housing chamber and transfers the collection target toward the sampling container, and
the collection kit jig includes
a kit holding portion that holds the collection kit by supporting the holder in a posture in which the housing chamber is positioned above the outflow path,
a container holding portion positioned below the kit holding portion and holding the sampling container, and
an elevation mechanism that raises or lowers the kit holding portion with respect to the container holding portion.

2. The collection kit jig according to claim 1, wherein the collection kit includes an adapter connected to the outflow path and to which the sampling container is attached,
the collection kit jig includes an adapter support portion that holds the adapter, and
the elevation mechanism integrally raises or lowers the kit holding portion and the adapter support portion with respect to the container holding portion.

3. The collection kit jig according to claim 1, wherein the kit holding portion includes a base portion and a retainer provided in the base portion, and the base portion and the retainer form a housing space for housing the holder in a state of surrounding the holder.

4. The collection kit jig according to claim 3, wherein the retainer includes a pocket space into which an end portion extending in an up-down direction in the holder can be inserted, and an insertion port positioned above the pocket space to insert the end portion into the pocket space.

5. The collection kit jig according to claim 4, wherein the retainer has a lid portion capable of opening and closing the insertion port.

6. The collection kit jig according to claim 1, wherein the holder has a plurality of holding holes, and
the kit holding portion has a plurality of holding pins to be respectively inserted into the plurality of holding holes.

7. The collection kit jig according to claim 1, wherein the kit holding portion includes a cover that covers the holder at a position facing the collection bag.

8. The collection kit jig according to claim 1, wherein the collection kit includes an exhaust flow path for exhausting air inside the housing chamber, and an exhaust valve provided in the exhaust flow path, and the kit holding portion includes an exhaust valve shielding portion covering an upper portion of the exhaust valve.

9. The collection kit jig according to any one of claims 1 to 8, wherein the collection bag includes the plurality of housing chambers.

10. The collection kit jig according to claim 9, wherein the collection kit jig includes a clamp portion that blocks communication between the plurality of housing chambers.

11. The collection kit jig according to claim 1, wherein the container holding portion is positioned and fixed, and the elevation mechanism raises or lowers the kit holding portion with respect to the container holding portion.

12. The collection kit jig according to claim 1, wherein the kit holding portion is positioned and fixed, and the elevation mechanism raises or lowers the container holding portion with respect to the kit holding portion.
